(19) Europäisches Patentamt
European Patent Office
Office européen des brevets

(11) **EP 4 645 943 A1**

(12) **EUROPEAN PATENT APPLICATION**
published in accordance with Art. 153(4) EPC

(43) Date of publication:
**05.11.2025 Bulletin 2025/45**

(21) Application number: **24756058.4**

(22) Date of filing: **04.02.2024**

(51) International Patent Classification (IPC):
*H04W 24/10* (2009.01)   *H04W 24/08* (2009.01)

(86) International application number:
**PCT/CN2024/075747**

(87) International publication number:
**WO 2024/169684 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023 CN 202310140828**

(71) Applicant: **Huawei Technologies Co., Ltd. Shenzhen, Guangdong 518129 (CN)**

(72) Inventors:
• **YUAN, Shitong**
  **Shenzhen, Guangdong 518129 (CN)**
• **ZHANG, Jiayin**
  **Shenzhen, Guangdong 518129 (CN)**

(74) Representative: **Pfenning, Meinig & Partner mbB Patent- und Rechtsanwälte Theresienhöhe 11a 80339 München (DE)**

(54) **MEASUREMENT REPORTING METHOD AND APPARATUS**

(57) This application relates to the field of communication technologies, and discloses a measurement reporting method and an apparatus. The method includes: After determining that a reporting condition of a measurement event is satisfied, a terminal device sends a MAC CE to a network device, where the MAC CE includes first information and second information, the first information indicates the measurement event, the second information includes measurement results of M measurement resources corresponding to the measurement event, and M is a positive integer. In this way, after determining that the reporting condition of the measurement event is satisfied, the terminal device sends the result of the measurement resource corresponding to the measurement event to the network device. In comparison with a manner in which the terminal device periodically reports the measurement result, reporting overheads can be effectively reduced, and transmission resources can be saved.

FIG. 4

**Description**

CROSS-REFERENCE TO RELATED APPLICATIONS

This application claims priority to Chinese Patent Application No. 202310140828.6, filed with the China National Intellectual Property Administration on February 15, 2023 and entitled "MEASUREMENT REPORTING METHOD AND APPARATUS", which is incorporated herein by reference in its entirety.

TECHNICAL FIELD

This application relates to the field of communication technologies, and in particular, to a measurement reporting method and an apparatus.

BACKGROUND

In a wireless communication system, communication between a terminal device and a network device complies with a specific protocol layer structure. For example, the protocol layer structure may include a radio resource control (radio resource control, RRC) layer, a packet data convergence protocol (packet data convergence protocol, PDCP) layer, a radio link control (radio link control, RLC) layer, a medium access control (media access control, MAC) layer, a physical (physical layer, PHY) layer, and the like. In the 3rd generation partnership project (3rd generation partnership project, 3GPP) standard, a layer 1 (layer 1, L1) may be the PHY layer, a layer 2 may be the MAC layer, and a layer 3 may be the RRC layer.

Currently, layer 1 measurement reporting is mainly configured or triggered by the network device. For example, if the network device obtains a layer 1 measurement result of the terminal device for cell handover decision, the terminal device needs to frequently report (for example, periodically report) the layer 1 measurement result. However, when a probability of performing cell handover by the terminal device is low, utilization of the layer 1 measurement result that is frequently reported by the terminal device is not high, and it may be considered that the reporting is unnecessary. Consequently, measurement reporting overheads are high.

SUMMARY

This application provides a measurement reporting method and an apparatus, to reduce measurement reporting overheads of a terminal device.

**According to a first aspect,** an embodiment of this application provides a measurement reporting method. The method may be applied to a terminal device or a component (for example, a circuit or a chip) in the terminal device. For example, the method is applied to the terminal device. In the method, after determining that a reporting condition of a measurement event is satisfied, the terminal device sends first information and second information to a network device, where the first information indicates the measurement event, the second information includes measurement results of M measurement resources corresponding to the measurement event, and M is a positive integer. Optionally, the terminal device may send a MAC CE to the network device, where the MAC CE includes the first information and the second information.

According to the foregoing method, after determining that the reporting condition of the measurement event is satisfied, the terminal device sends the result of the measurement resource corresponding to the measurement event to the network device. In comparison with a manner in which the terminal device periodically reports the measurement result, reporting overheads can be effectively reduced, and transmission resources can be saved.

In a possible design, the first information includes one or more of the following: an identifier of the measurement event; identifiers of the M measurement resources; an identifier of a cell associated with the M measurement resources; and an identifier of a measurement resource set to which the M measurement resources belong. In this way, one or more of the foregoing items are used to indicate the measurement event, so that an implementation is flexible.

In a possible design, the method further includes: receiving first indication information from the network device, where the first indication information indicates that the MAC CE needs to include the second information.

In this way, the network device configures whether the MAC CE reported by the terminal device needs to include the second information, so that the network device flexibly controls the information reported by the terminal device.

In a possible design, the MAC CE includes third information, and the third information indicates that the MAC CE includes the second information.

In this way, from a perspective of the network device, when the MAC CE includes the first information but does not include the second information, the network device may parse the MAC CE based on a first length; or when the MAC CE includes the first information and the second information, the network device may parse the MAC CE based on a second length. The second length is greater than the first length. Therefore, after receiving the MAC CE, the network device may determine, based on whether the MAC CE includes the third information, whether to parse the MAC CE based on the first length or the second length, to improve a parsing success rate.

In a possible design, sending the MAC CE to the network device includes: receiving second indication information from the network device, where the second indication information indicates a first uplink resource; and sending the MAC CE to the network device on the first uplink resource.

In a possible design, the method further includes: sending request information to the network device, where the request information is used to request the first uplink resource.

In a possible design, the request information further indicates that the reporting condition of the measurement event is satisfied.

In this way, the network device may learn that a reason for requesting the first uplink resource is that the reporting condition of the measurement event is satisfied, so as to allocate an appropriate uplink resource.

In a possible design, the request information is carried on a second uplink resource, and the second uplink resource is preconfigured by the network device.

In a possible design, the second indication information is carried in downlink control information DCI, and the DCI further includes one or more of the following: the identifier of the measurement event, where the identifier of the measurement event indicates that the first uplink resource is used to report the measurement result of the measurement resource corresponding to the measurement event; reporting manner information, where the reporting manner information indicates to periodically report the measurement result on the first uplink resource; report amount information, where the report amount information indicates a quantity of times of reporting the measurement result on the first uplink resource; reporting quantity information, where the reporting quantity information indicates a quantity of measurement resources corresponding to each time of reporting the measurement result on the first uplink resource.

In a possible design, the method further includes: receiving configuration information from the network device, where the configuration information is used to configure the reporting condition of the measurement event.

In a possible design, the configuration information is further used to configure one or more of the following: the identifier of the measurement event; an identifier of a measurement resource corresponding to the measurement event; an identifier of a measurement resource set corresponding to the measurement event; a quantity of measurement resources corresponding to a measurement result that needs to be reported when the reporting condition of the measurement event is satisfied; and a quantity of reporting times required when the reporting condition of the measurement event is satisfied.

In a possible design, before sending the MAC CE to the network device, the method further includes: determining that a preset condition is satisfied, where the preset condition includes one or more of the following: The measurement results of the M measurement resources have not been reported; a measurement result of the measurement resource set to which the M measurement resources belong has not been reported; a time interval between first time and second time is less than preset duration, where the first time is time at which it is determined that the reporting condition of the measurement event is satisfied, and the second time is time at which the MAC CE is sent; or the time interval is greater than or equal to the preset duration, but the reporting condition of the measurement event is always satisfied within the time interval.

In this way, whether to perform reporting is determined by determining whether the preset condition is satisfied, to further reduce measurement reporting overheads.

In a possible design, the method further includes: receiving third indication information from the network device, where the third indication information indicates that the preset condition needs to be satisfied before the MAC CE is sent.

**According to a second aspect,** an embodiment of this application provides a measurement receiving method. The method may be applied to a network device or a component (for example, a circuit or a chip) in the network device. For example, the method is applied to the network device. In the method, the network device receives a MAC CE from a terminal device, the MAC CE includes first information and second information, the first information indicates a measurement event, the second information includes measurement results of M measurement resources corresponding to the measurement event, M is a positive integer, and the MAC CE is sent by the terminal device after the terminal device determines that a reporting condition of the measurement event is satisfied.

In a possible design, the first information includes one or more of the following: an identifier of the measurement event; identifiers of the M measurement resources; an identifier of a cell associated with the M measurement resources; and an identifier of a measurement resource set to which the M measurement resources belong.

In a possible design, the method further includes: sending first indication information to the terminal device, where the first indication information indicates that the MAC CE needs to include the first information and the second information.

In a possible design, the MAC CE includes third information, and the third information indicates that the MAC CE includes the second information.

In a possible design, receiving the MAC CE from the terminal device includes: sending second indication information to the terminal device, where the second indication information indicates a first uplink resource; and receiving the MAC CE from the terminal device on the first uplink resource.

In a possible design, the method further includes: receiving request information from the terminal device, where the request information is used to request the first uplink resource.

In a possible design, the request information further indicates that the reporting condition of the measurement event is satisfied.

In a possible design, the request information is carried on a second uplink resource, and the second uplink resource is preconfigured by the network device.

In a possible design, the second indication information is carried in DCI, and the DCI further includes one or more of the following: the identifier of the measurement event, where the identifier of the measurement event indicates that the first uplink resource is used to report the measurement result of the measurement resource corresponding to the measurement event; reporting manner information, where the reporting manner information indicates to periodically report the measurement result on the first uplink resource; report amount information, where the report amount information indicates a quantity of times of reporting the measurement result on the first uplink resource; reporting quantity information, where the reporting quantity information indicates a quantity of measurement resources corresponding to each time of reporting the measurement result on the first uplink resource.

In a possible design, the method further includes: sending configuration information to the terminal device, where the configuration information is used to configure the reporting condition of the measurement event.

In a possible design, the configuration information is further used to configure one or more of the following: the identifier of the measurement event; an identifier of a measurement resource corresponding to the measurement event; an identifier of a measurement resource set corresponding to the measurement event; a quantity of measurement resources corresponding to a measurement result that needs to be reported when the reporting condition of the measurement event is satisfied; and a quantity of reporting times required when the reporting condition of the measurement event is satisfied.

In a possible design, the method further includes: sending third indication information to the terminal device, where the third indication information indicates that a preset condition needs to be satisfied before the MAC CE is sent, and the preset condition includes one or more of the following: The measurement results of the M measurement resources have not been reported; a measurement result of the measurement resource set to which the M measurement resources belong has not been reported; a time interval between first time and second time is less than preset duration, where the first time is time at which it is determined that the reporting condition of the measurement event is satisfied, and the second time is time at which the MAC CE is sent; or the time interval is greater than or equal to the preset duration, but the reporting condition of the measurement event is always satisfied within the time interval.

It may be understood that the method that claims protection in the second aspect corresponds to the method that claims protection in the first aspect. Therefore, for beneficial effect of related technical features in the second aspect, refer to the descriptions in the first aspect.

**According to a third aspect,** an embodiment of this application provides a communication method. The method may be applied to a terminal device and a network device. In the method, after determining that a reporting condition of a measurement event is satisfied, the terminal device sends a medium access control MAC control element CE to the network device, where the MAC CE includes first information and second information, the first information indicates the measurement event, the second information includes measurement results of M measurement resources corresponding to the measurement event, and M is a positive integer; and correspondingly, the network device receives the MAC CE.

For the third aspect, for other possible interactions between the network device and the terminal device, refer to the descriptions in the first aspect and the second aspect. Details are not described herein again.

**According to a fourth aspect,** an embodiment of this application provides a measurement reporting method. The method may be applied to a terminal device or a component (for example, a circuit or a chip) in the terminal device. For example, the method is applied to the terminal device. In the method, the terminal device receives first configuration information from a network device, where the first configuration information is used to configure at least one measurement event; receives second configuration information from the network device, where the second configuration information is used to configure a first measurement resource set and a second measurement resource set, the first measurement resource set is associated with a first measurement event in the at least one measurement event, the second measurement resource set is not associated with any measurement event in the at least one measurement event, and both the first measurement resource set and the second measurement resource set correspond to a first uplink resource; and if it is determined that a reporting condition of the first measurement event is satisfied, sends a measurement result of the first measurement resource set on the first uplink resource; or if it is determined that the reporting condition of the first measurement event is not satisfied, sends a measurement result of the second measurement resource set on the first uplink resource.

According to the foregoing method, an existing reporting configuration (for example, the reporting configuration is used to configure the first uplink resource) is enhanced. In other words, the first uplink resource is not only associated with the second measurement resource set, but also associated with the first measurement resource set, so that measurement result reporting triggered by the measurement event can be implemented, to reduce reporting overheads.

In a possible design, the method further includes: sending indication information on the first uplink resource, where the indication information indicates whether the reporting condition of the first measurement event is satisfied.

In this way, the network device can learn whether the measurement result received on the first uplink resource is the measurement result of the first measurement resource set or the measurement result of the second measurement resource set.

**According to a fifth aspect,** an embodiment of this application provides a measurement receiving method. The method may be applied to a network device or a component (for example, a circuit or a chip) in the network device. For example, the method is applied to the network device. In the method, the network device sends first configuration information to a terminal device, where the first configuration information is used to configure at least one measurement event; sends second configuration information to the terminal device, where the second configuration information is used to configure a first measurement resource set and a second measurement resource set, the first measurement resource set is associated with a first measurement event in the at least one measurement event, the second measurement resource set is not associated with any measurement event in the at least one measurement event, and both the first measurement resource set and the second measurement resource set correspond to a first uplink resource; and receives first information or second information on the first uplink resource, where the first information includes a measurement result of the first measurement resource set, and the second information includes a measurement result of a measurement resource in the second measurement resource set.

In a possible design, the first information further includes indication information, and the indication information indicates that the reporting condition of the first measurement event is satisfied.

**According to a sixth aspect,** an embodiment of this application provides a communication method. The method may be applied to a terminal device and a network device. In the method, the network device sends first configuration information to the terminal device, where the first configuration information is used to configure at least one measurement event; and the network device sends second configuration information to the terminal device, where the second configuration information is used to configure a first measurement resource set and a second measurement resource set, the first measurement resource set is associated with a first measurement event in the at least one measurement event, the second measurement resource set is not associated with any measurement event in the at least one measurement event, and both the first measurement resource set and the second measurement resource set correspond to a first uplink resource. Further, if it is determined that a reporting condition of the first measurement event is satisfied, the terminal device sends first information on the first uplink resource, where the first information includes a measurement result of the first measurement resource set; or if it is determined that the reporting condition of the first measurement event is not satisfied, the terminal device sends second information on the first uplink resource, where the second information includes a measurement result of a measurement resource in the second measurement resource set.

**According to a seventh aspect,** this application provides a communication apparatus. The communication apparatus has a function of implementing the first aspect, the second aspect, the fourth aspect, or the fifth aspect. For example, the communication apparatus includes a corresponding module, unit, or means (means) for performing an operation in the first aspect, the second aspect, the fourth aspect, or the fifth aspect. The module, unit, or means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in the first aspect, the second aspect, the fourth aspect, or the fifth aspect.

In a possible design, the communication apparatus includes a processor, and the processor may be configured to be coupled to a memory. The memory may store a computer program or instructions necessary for implementing the functions in the first aspect, the second aspect, the fourth aspect, or the fifth aspect. The processor may execute the computer program or the instructions stored in the memory. When the computer program or the instructions are executed, the communication apparatus is enabled to implement the method in any possible design or implementation of the first aspect, the second aspect, the fourth aspect, or the fifth aspect.

In a possible design, the communication apparatus includes a processor and a memory. The memory may store a computer program or instructions necessary for implementing the functions in the first aspect, the second aspect, the fourth aspect, or the fifth aspect. The processor may execute the computer program or the instructions stored in the memory. When the computer program or the instructions are executed, the communication apparatus is enabled to implement the method in any possible design or implementation of the first aspect, the second aspect, the fourth aspect, or the fifth aspect.

In a possible design, the communication apparatus includes a processor and an interface circuit. The processor is configured to communicate with another apparatus through the interface circuit, and perform the method in any possible design or implementation of the first aspect, the second aspect, the fourth aspect, or the fifth aspect.

It may be understood that, in the seventh aspect, the processor may be implemented by using hardware, or may be implemented by using software. When being implemented by using the hardware, the processor may be a logic circuit, an integrated circuit, or the like; or when being implemented by using the software, the processor may be a general-purpose processor, and is implemented by reading software code stored in the memory. In addition, there may be one or more processors, and one or more memories. The memory may be integrated with the processor, or the memory and the processor are separately disposed. In a specific implementation process, the memory and the processor may be integrated on a same chip, or may be separately disposed on different chips. A type of the memory and a manner of disposing the memory and the processor are not limited in embodiments of this application.

**According to an eighth aspect,** this application provides a communication system. The communication system may include a terminal device and a network device. The terminal device is configured to perform the method provided in the first aspect, and the network device is configured to perform the method provided in the second aspect. Alternatively, the terminal device is configured to perform the method provided in the fourth aspect, and the network device is configured to perform the method provided in the fifth aspect.

**According to a ninth aspect,** this application provides a computer-readable storage medium. The computer storage medium stores computer-readable instructions, and when a computer reads and executes the computer-readable instructions, the computer is enabled to perform the method according to any possible design of the first aspect to the sixth aspect.

**According to a tenth aspect,** this application provides a computer program product. When a computer reads and executes the computer program product, the computer is enabled to perform the method according to any possible design of the first aspect to the sixth aspect.

**According to an eleventh aspect,** this application provides a chip. The chip includes a processor, and the processor is coupled to a memory, and is configured to read and execute a software program stored in the memory, to implement the method according to any possible design of the first aspect to the sixth aspect.

BRIEF DESCRIPTION OF DRAWINGS

FIG. 1 is a diagram of a network architecture to which an embodiment of this application is applicable;
FIG. 2 is a diagram of an NR measurement model according to an embodiment of this application;
FIG. 3 is a diagram of a process of triggering reporting of an event A1 according to an embodiment of this application;
FIG. 4 is a schematic flowchart corresponding to a measurement reporting method according to Embodiment 1 of this application;
FIG. 5 is a diagram of a time interval according to an embodiment of this application;
FIG. 6 is a schematic flowchart corresponding to a measurement reporting method according to Embodiment 2 of this application;
FIG. 7 is a block diagram of a possible example of an apparatus according to an embodiment of this application;
FIG. 8 is a diagram of a structure of a terminal device according to an embodiment of this application; and
FIG. 9 is a diagram of a structure of a network device according to an embodiment of this application.

DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, a future evolved communication system like a 6th generation (6th generation, 6G) mobile communication system, and the like

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme.

Exactly, the word "example" is used to present a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

A communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

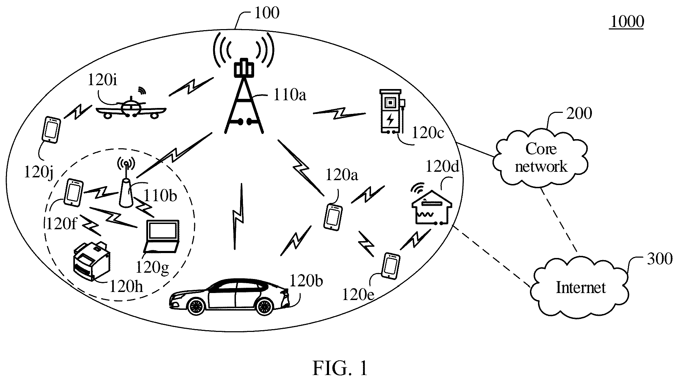

For ease of understanding embodiments of this application, a communication system shown in **FIG. 1** is first used as an example to describe in detail the communication system applicable to embodiments of this application. As shown in FIG. 1, a communication system 1000 includes a radio access network 100 and a core network 200. Optionally, the communication system 1000 may further include an internet 300. The radio access network 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle.

In FIG. 1, the terminal device may be connected to the network device, and the network device may be connected to a core network device in the core network. The core network device and the network device may be different physical devices independent of each other, or functions of the core network device and logical functions of the network device may be integrated into a same physical device, or some functions of the core network device and some functions of the network device may be integrated into one physical device. Terminal devices may be connected to each other and network devices may be connected to each other in a wired or wireless manner. FIG. 1 is merely a diagram. The communication system may further include another device, for example, a wireless relay device and a wireless backhaul device, which are not drawn in FIG. 1.

The following describes the network device and the terminal device.

(1) Network device

The network device is a device that connects a terminal device to a wireless network in a mobile communication system. As a node in a radio access network, the network device may also be referred to as a base station, a radio access network (radio access network, RAN) node (or device), an access point (access point, AP), or an access network (access network, AN) device.

Currently, some examples of the network device are as follows: a next generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a transmission reception point (transmitting and receiving point, TRP), a transmission point (transmitting point, TP), a mobile switching center, a home base station (for example, a home evolved NodeB or a home NodeB, HNB), a baseband unit (baseband unit, BBU), or the like.

In addition, in a network structure, the network device may include a central unit (centralized unit, CU) node and a distributed unit (distributed unit, DU). In this structure, a protocol layer of the network device is split. Some protocol-layer functions are controlled by the CU in a centralized manner, some or all of the remaining protocol-layer functions are distributed in the DU, and the CU controls the DU in a centralized manner. For example, the CU is responsible for processing a non-real-time protocol and service, to implement functions of an RRC layer and a PDCP layer. The DU is responsible for processing a physical layer protocol and a real-time service, to implement functions of an RLC layer, a MAC layer, and a PHY layer.

Optionally, the network device may further include an active antenna unit (active antenna unit, AAU). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may include one or more of the CU, the DU, and the AAU. In addition, the CU may be divided into a network device in an access network, or the CU may be divided into a network device in a core network. This is not limited in this application.

A specific technology and a specific device form that are used by the network device are not limited in embodiments of this application. In embodiments of this application, an apparatus configured to implement a function of the network device may be a network device; or may be an apparatus, for example, a chip system, that can support the network device in implementing the function. The apparatus may be mounted in the network device. The chip system may include a chip, or may include a chip and another discrete device. In embodiments of this application, functions of the network device may alternatively be implemented by using a plurality of network function entities, and each network function entity is configured to implement some functions of the network device. These network function entities may be network elements in a hardware device, may be software functions run on dedicated hardware, or may be virtualized functions instantiated on a platform (for example, a cloud platform). In the technical solutions provided in embodiments of this application, the technical solutions provided in embodiments of this application are described by using an example in which the apparatus configured to implement the function of the network device is the network device.

(2) Terminal device

The terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, terminal equipment, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In embodiments of this application, an apparatus configured to implement a function of the terminal device may be the terminal device, or may be an apparatus, for example, a chip, a chip system, or a module, that can support the terminal device in implementing the function. The apparatus may be mounted in the terminal device. In the technical solutions provided in embodiments of this application, the technical solutions provided in embodiments of this application are described by using an example in which the apparatus configured to implement the function of the terminal device is the terminal device.

In addition, a same terminal device or network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal device may be relative. For example, the helicopter or the uncrewed aerial vehicle 120i in FIG. 1 may be configured as a mobile base station. For the terminal device 120j that accesses the radio access network 100 through 120i, the terminal device 120i is a base station. However, for the base station 110a, 120i is a terminal device. In other words, 110a communicates with 120i by using a wireless air interface protocol. Certainly, 110a and 120i may alternatively communicate with each other based on an interface protocol between base stations. In this case, for 110a, 120i is also a base station. Therefore, both the radio access network device and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

The network device and the terminal device may be at fixed locations, or may be movable. The network device and the terminal device may be deployed on land, including being deployed indoor, outdoor, hand-held, or vehicle-mounted, or may be deployed on water, or may be deployed on an aircraft, a balloon, or an artificial satellite in the air. Application scenarios of the network device and the terminal device are not limited in embodiments of this application.

Communication may be performed between the network device and the terminal device, between the network devices, and between the terminal devices by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, sending information to .... (the terminal device) may be understood as that a destination of the information is the terminal device, and may include directly or indirectly sending the information to the terminal device. "Receiving information from ... (the terminal device)" may be understood as that a source end of the information is the terminal device, and may include directly or indirectly receiving the information from the terminal device. Necessary processing like a format change may be performed on the information between the source end and the destination end for information sending. However, the destination end can understand valid information from the source end. A similar expression in this application may be understood similarly, and details are not described herein again.

It may be understood that the technical solutions in embodiments of this application may be further applied to another communication system, and a corresponding name may alternatively be replaced with a name of a corresponding function in the another communication system. FIG. 1 is merely a simplified diagram of an example for ease of understanding. The communication system may further include another device that is not drawn in FIG. 1.

The following first describes related technical features in embodiments of this application. It should be noted that these explanations are intended to make embodiments of this application easier to understand, but should not be considered as a limitation on the protection scope claimed in this application.

## 1. Beam

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams. Optionally, a plurality of beams having a same or similar communication feature may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set.

When a low frequency band or an intermediate-frequency band is used, a signal may be sent omnidirectionally or sent at a wide angle. When a high-frequency band is used, because of a small carrier wavelength of a high-frequency communication system, an antenna array formed by a plurality of antenna elements may be disposed at a transmit end and a receive end. The transmit end sends a signal by using a specific beamforming weight, so that the sent signal forms a spatially directional beam, and the receive end receives the signal through the antenna array by using a specific beamforming weight, so that received power of the signal at the receive end can be increased, and a path loss can be avoided.

## 2. Reference signal

According to an LTE/NR protocol, uplink communication at a physical layer includes transmission of an uplink physical channel and an uplink reference signal. The uplink physical channel includes a random access channel (random access channel, PRACH), a physical uplink control channel (physical uplink control channel, PUCCH), a physical uplink data channel (physical uplink shared channel, PUSCH), and the like. The uplink reference signal includes a channel sounding reference signal (sounding reference signal, SRS), a PUCCH-demodulation reference signal (de-modulation reference signal, DMRS), a PUSCH-DMRS, an uplink phase noise tracking reference signal (phase noise tracking reference signal, PTRS), an uplink positioning reference signal (uplink positioning RS), and the like. Downlink communication includes transmission of a downlink physical channel and a downlink reference signal. The downlink physical channel includes a physical broadcast channel (physical broadcast channel, PBCH), a physical downlink control channel (physical downlink control channel, PDCCH), a physical downlink data channel (physical downlink shared channel, PDSCH), and the like. The downlink reference signal includes a primary synchronization signal (primary synchronization signal, PSS)/secondary synchronization signal (secondary synchronization signal, SSS), a synchronization signal/physical broadcast channel block (synchronization signal/physical broadcast channel block, SSB), a PDCCH-DMRS, a PDSCH-DMRS, a downlink PTRS, a channel state information reference signal (channel status information reference signal, CSI-RS), a cell reference signal (cell reference signal, CRS) (not available in NR), a time-frequency tracking reference signal (time-frequency tracking reference signal, TRS) (not available in LTE), an LTE/NR positioning reference signal (positioning RS), and the like.

## 3. Layer 1 measurement and Layer 3 measurement

Mobility management is a general term of related content for ensuring a communication link between a network and a terminal device irrespective of movement of the terminal device. Based on a status of the terminal device, the mobility management may be roughly classified into two parts: mobility management in an RRC idle state and mobility management in an RRC connected state. The mobility management in the RRC idle state mainly refers to a cell selection/reselection process. The mobility management in the RRC connected state mainly refers to a cell handover process. Both cell selection/reselection and cell handover are performed based on measurement results. Therefore, measurement is a basis of the mobility management.

Measurement of the terminal device includes measurement of a serving cell of the terminal device, and further includes measurement of a neighbor cell, for example, measurement of a neighbor cell in a same communication system, or measurement of a neighbor cell in an inter-RAT system. Based on layers used in measurement, the measurement can be classified into two types: physical layer measurement (namely, layer 1 measurement) and RRC layer measurement (namely, layer 3 measurement). A layer 1 measurement result may include one or more of the following: beam-level quality of a layer 1, cell-level quality of the layer 1, and beam group-level quality of the layer 1 (one beam group may include a plurality of beams). A layer 3 measurement result may include one or more of the following: beam-level quality of a layer 3, beam group-level quality of the layer 3, and cell-level quality of the layer 3.

For example, an implementation in which the terminal device obtains the layer 1 measurement result is as follows: The network device sends reference signals (for example, SSBs and CSI-RSs) in a plurality of beam directions of a cell. Correspondingly, the terminal device performs measurement based on a reference signal on a time-frequency resource indicated by the network device. For example, the terminal device may obtain, through sampling, a plurality of transitory signal strengths in a time period that are of a beam corresponding to the reference signal, and weight or combine the plurality of obtained signal strengths, to obtain a measurement result of the beam. The measurement result of the beam may also be referred to as beam quality (beam quality). Further, the terminal device may filter the measurement result of the beam through layer 1 filtering, to obtain a measurement result that is of the beam and that is obtained through layer 1 filtering. A layer 1 filtering parameter may be configured by the network device for the terminal device. The beam-level quality of the layer 1 may be a measurement result that is of a beam and that is obtained through layer 1 filtering. The cell-level quality of the layer 1 may be obtained by weighting or combining measurement results that are of a plurality of beams of the cell and that are obtained through layer 1 filtering. The beam group quality of the layer 1 may be obtained by weighting or combining measurement results that are of a plurality of beams included in a beam group and that are obtained through layer 1 filtering.

An implementation in which the terminal device obtains the layer 3 measurement result is as follows: The terminal device may perform layer 3 filtering on the measurement result that is of the beam and that is obtained through layer 1 filtering, to obtain a measurement result that is of the beam and that is obtained through layer 3 filtering, namely, the beam-level quality of the layer 3. The cell-level quality of the layer 3 may be obtained by weighting or combining measurement results that are of a plurality of beams of the cell and that are obtained through layer 3 filtering. The beam group quality of the layer 3 may be obtained by weighting or combining measurement results that are of a plurality of beams included in the beam group and that are obtained through layer 3 filtering.

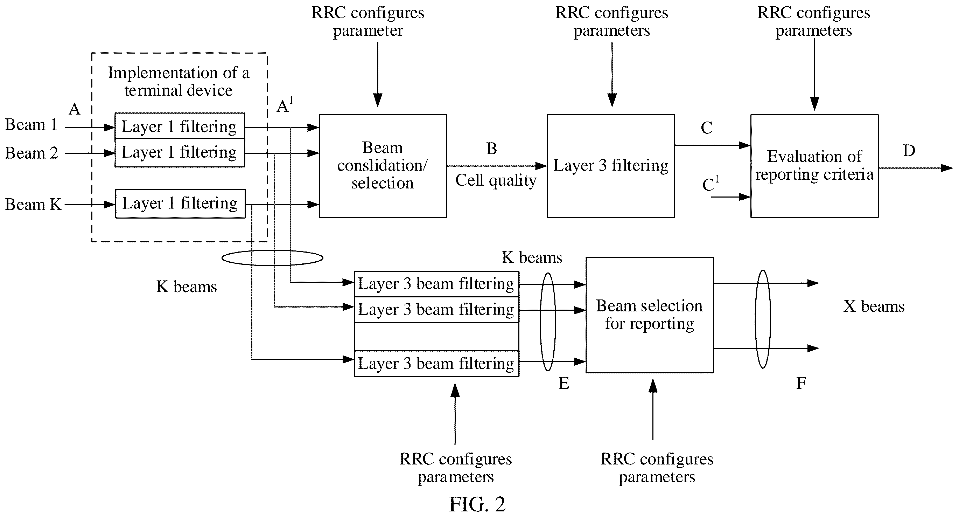

For example, FIG. 2 is a diagram of an NR measurement model. For related descriptions of FIG. 2, refer to the 3GPP protocol TS38.300. Details are not described herein again. In the measurement model shown in FIG. 2, a point represents measurement results that are of K beams and that are obtained through layer 1 filtering, a point B represents cell quality, a point C represents cell quality obtained through layer 3 filtering, a point D represents cell quality reported according to a reporting criterion, a point E represents measurement results that are of the K beams and that are obtained through layer 3 filtering, and a point F represents quality of X beams that are selected for reporting. The beam-level quality of the layer 3 may be the quality of the X beams reported at the point F in FIG. 2, and the cell-level quality of the layer 3 may be the cell quality reported at the point D in FIG. 2.

## 4. Layer 1 measurement reporting

Currently, the layer 1 measurement reporting is configured or triggered by a network device, and may specifically include periodic (periodic) reporting, aperiodic (aperiodic) reporting, or semi-persistent (semi-persistence) reporting. The periodic reporting is used as an example. The network device may configure a periodic PUCCH or PUSCH resource for a terminal device, so that the terminal device may send a layer 1 measurement result on the periodic PUCCH or PUSCH resource.

## 5. Layer 3 measurement reporting

Currently, the layer 3 measurement reporting may include periodically triggered reporting and reporting triggered by a measurement event. If the reporting is periodically triggered, a terminal device sends a layer 3 measurement result to a network device based on a corresponding periodicity. If the reporting is triggered by the measurement event, for example, a measurement configuration message indicates the corresponding measurement event, the terminal device may send a layer 3 measurement result to the network device when a reporting condition of the measurement event is satisfied.

There may be a plurality of layer 3 measurement events. For example, Table 1 shows some possible measurement events.

Table 1: Layer 3 measurement events

| Measurement event | Meaning |
|---|---|
| A1 | Signal quality of a serving cell is lower than a threshold |
| A2 | Signal quality of a serving cell is lower than a threshold |
| A3 | Signal quality of a neighbor cell is better than signal quality of a primary cell (primary cell, Pcell)/primary secondary cell (primary secondary cell, PSCell) |
| A4 | Signal quality of a neighbor cell is higher than a threshold |
| A5 | Signal quality of a serving cell is lower than a threshold 1, and signal quality of a neighbor cell is higher than a threshold 2 |
| A6 | Signal quality of a neighbor cell is better than signal quality of a secondary cell (secondary cell, Scell) |
| B1 | Signal quality of an inter-RAT neighbor cell is higher than a threshold |
| B2 | Signal quality of a serving cell is lower than a threshold 1, and signal quality of an inter-RAT neighbor cell is higher than a threshold 2 |

In Table 1, the "meaning" indicates a specific type of a corresponding event. In addition, each event has a corresponding "entering condition (entering condition)" and "leaving condition (leaving condition)". The "entering condition" indicates a condition that needs to be satisfied to enter the event, and the "leaving condition" indicates a condition that needs to be satisfied to leave the event.

The event A1 in Table 1 is used as an example. The event A1 refers to an event in which a service of a serving cell is better than a threshold. An "entering condition" of the event A1 is indicated by an inequality A1-1, and a "leaving condition" of the event is indicated by an inequality A1-2.

$$Ms-Hys>Thresh \qquad\qquad (A1\text{-}1)$$

$$Ms+Hys<Thresh \qquad\qquad (A1\text{-}2)$$

For the event A1, $Ms$ indicates a result of measurement performed by the terminal device on the serving cell, and the measurement result may indicate quality of the serving cell (or signal quality of the serving cell). The measurement result may be one of reference signal received power (reference signal receiving power, RSRP), reference signal received quality (reference signal receiving quality, RSRQ), or a signal to interference plus noise ratio (signal to interference plus noise ratio, SINR). $Hys$ indicates a hysteresis parameter (hysteresis parameter) of a measurement value, and may be an integer ranging from 0 to 30. The network device may configure $Hys$ by using an RRC connection reconfiguration message. Herein, $Thresh$ indicates a threshold (threshold parameter), and the network device may also configure $Thresh$ by using the RRC connection reconfiguration message. It should be noted that the event in Table 1 is used as an example in this paragraph. Herein, $Ms$ described in this paragraph is a parameter that is configured for the event A1 and that indicates the result of measurement performed by the terminal device on the serving cell, $Hys$ is a hysteresis parameter configured for the event A1, and $Thresh$ is a threshold configured for the event A1. Parameters (for example, hysteresis parameters or thresholds) configured for different events may be different.

Therefore, the inequality A1-1 indicates that if a difference between quality of service indicated by the result of measurement performed by the terminal device on the serving cell and the hysteresis parameter is greater than the threshold, the event A1 is entered, or the event is satisfied. The inequality A1-2 indicates that if a sum of the quality of service indicated by the result of measurement performed by the terminal device on the serving cell and the hysteresis parameter is less than the threshold, the event A1 is left, or the event A1 is not satisfied.

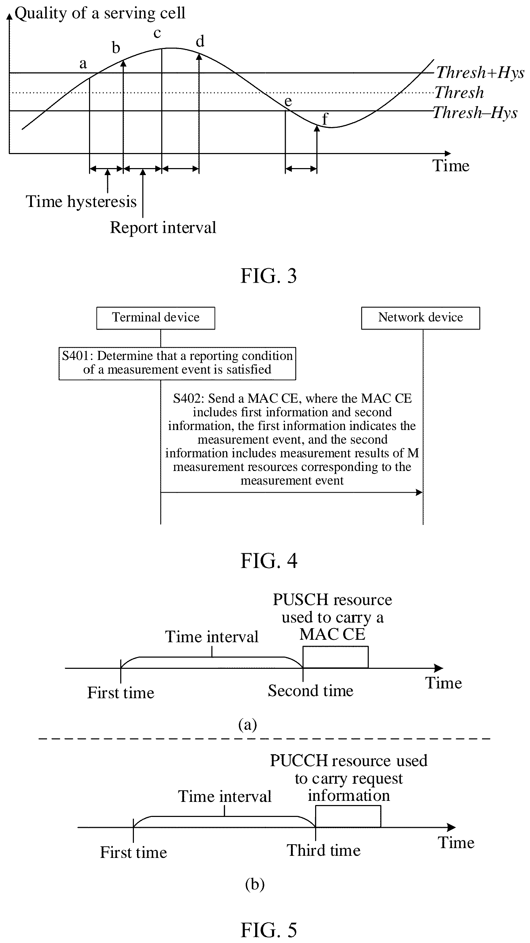

FIG. 3 is a diagram of a process of triggering reporting of the event A1. As shown in FIG. 3, a point a indicates that the entering condition of the event A1 is satisfied. If the entering condition is still satisfied at a point b after timeToTrigger (timeToTrigger is also referred to as time hysteresis), the terminal device may report the measurement result. If a current quantity of times of reporting is less than a quantity threshold (for example, reportAmount, which may be configured by the network device), after a specific report interval (reportInterval), the foregoing measurement determining and reporting processes are repeated, and a measurement result is reported at a point d. A point e indicates that the leaving condition of the event is satisfied. If reportOnLeave is true and the leaving condition is still satisfied after timeToTrigger, a last measurement result is reported.

In this way, *Hys* is set, and in comparison with "immediately report a measurement result when *Ms>Thresh"*, the hysteresis design prevents frequent switchover between "report" and "not report" the measurement result when *Thresh* fluctuates between *Thresh-Hys* and *Thresh+Hys,* that is, prevents the "ping-pong effect".

## 6. Measurement resource

A network device may configure at least one measurement resource for a terminal device. The measurement resource may be a data structure, and includes a related parameter of an uplink/downlink reference signal corresponding to the measurement resource, for example, an uplink reference signal resource or a downlink reference signal resource. For the uplink reference signal and the downlink reference signal, refer to the foregoing descriptions. Further, the terminal device may perform measurement on a corresponding measurement resource. In a configuration structure, one measurement resource may include a type of a downlink reference signal, a resource granularity carrying an uplink/-downlink reference signal, sending time and a sending periodicity of the uplink/downlink reference signal, a quantity of ports used to send the uplink/downlink reference signal, and the like.

The measurement resource configured by the network device for the terminal device may have a global ID. When one or more measurement resources are configured as one measurement resource set, any one of the measurement resources may further have an ID in the measurement resource set. For example, the network device configures a measurement resource 1 to a measurement resource 50 for the terminal device. A global ID of the measurement resource 1 is "1", a global ID of the measurement resource 2 is "2", and the rest can be deduced by analogy. If the measurement resource 10 to the measurement resource 26 belong to one measurement resource set, an ID of the measurement resource 10 in the measurement resource set may be "1", an ID of the measurement resource 11 in the measurement resource set may be "2", and the rest can be deduced by analogy. In other words, for a measurement resource, if the measurement resource belongs to no measurement resource set, an identifier of the measurement resource may be a global ID; or if the measurement resource belongs to a measurement resource set, an identifier of the measurement resource may be a global ID and/or an ID of the measurement resource in the measurement resource set.

For example, a plurality of measurement resources configured by the network device for the terminal device may be associated with different cells. For example, the network device configures the measurement resource 1 to the measurement resource 50 for the terminal device, and configures the measurement resource 1 to the measurement resource 20 to be associated with a serving cell, the measurement resource 21 to the measurement resource 40 to be associated with a neighbor cell 1, and the measurement resource 41 to the measurement resource 50 to be associated with a neighbor cell 2. In other words, measurement resources associated with different cells have different identifiers (for example, global IDs). In this case, when the terminal device needs to report a measurement result of the measurement resource 12 to the network device, the terminal device may send a global ID of the measurement resource 12 and the measurement result of the measurement resource 12 to the network device, and the network device may learn of, based on the global ID of the measurement resource 12, the cell associated with the measurement resource 12.

For another example, the network device configures measurement resources for the terminal device in different cells, and identifiers (for example, global IDs) of measurement resources associated with the different cells may be the same. For example, for a serving cell, the network device configures 10 measurement resources for the terminal device, and global IDs of the 10 measurement resources are respectively 1 to 10. For a neighbor cell 1, the network device configures 10 measurement resources for the terminal device, and global IDs of the 10 measurement resources are also respectively 1 to 10. In this case, when the terminal device needs to report, to the network device, a measurement result of a measurement resource 1 associated with the neighbor cell 1, the terminal device may send an identifier of the neighbor cell 1, a global ID of the measurement resource 1, and the measurement result of the measurement resource 1 to the network device.

In addition, the network device may further configure one or more reporting configurations for the terminal device, and each reporting configuration is associated with one measurement resource set. Each reporting configuration may include a reporting ID, reporting resource information, and reporting manner information. The reporting resource information indicates a reporting resource, and the reporting manner information indicates that a reporting manner is periodic reporting, aperiodic reporting, or semi-persistent reporting. For example, if a measurement resource set 1 corresponds to a reporting configuration 1, the terminal device may report a measurement result of the measurement resource set 1 on a reporting resource corresponding to the reporting configuration 1.

The measurement result of the measurement resource set 1 may include measurement results of some or all measurement resources in the measurement resource set 1 (for example, measurement results of some measurement resources with good measurement results). In an example, if the measurement resource set 1 includes a measurement resource associated with a neighbor cell, it may be configured in the reporting configuration 1 that the measurement result of the measurement resource set 1 needs to include a measurement result of at least one measurement resource associated with the neighbor cell. This is not limited in embodiments of this application.

It may be understood that the network device may configure measurement resources of the serving cell and a non-serving cell (a candidate cell or a neighbor cell) for the terminal device in a plurality of manners. For example, a measurement resource of the candidate cell or the neighbor cell may be included in a configuration of the serving cell. For example, the measurement resource of the candidate cell or the neighbor cell and the measurement resource of the serving cell are configured as a uniform measurement resource set. To be specific, some measurement resources in the measurement resource set are measurement resources of the serving cell, and some measurement resources are measurement resources of the candidate cell and are associated with an identifier of the non-serving cell. Alternatively, the measurement resource of the candidate cell or the neighbor cell may be included in a cell configuration of the serving cell, but the measurement resource of the candidate cell or the neighbor cell and the resource of the serving cell are configured as independent measurement resource sets. Specifically, measurement resources of all non-serving cells may be configured as a uniform set, or measurement resources of each non-serving cell may be configured as an independent set, or at least one non-serving cell may be considered as a cell group, and measurement resources of the at least one non-serving cell may be configured as a set. Alternatively, the measurement resource of the candidate cell or the neighbor cell is included in a cell configuration corresponding to the candidate cell or the neighbor cell. The configuration is sent by the serving cell to the terminal device in a handover preparation phase, and the terminal device obtains a measurement resource configuration based on the cell configuration of the corresponding candidate cell or the neighbor cell.

The foregoing describes related technical features in embodiments of this application. It can be learned from the foregoing descriptions that currently, layer 1 measurement reporting is configured or triggered by the network device. For example, if the network device obtains a layer 1 measurement result of the terminal device for cell handover decision, the terminal device needs to frequently report (for example, periodically report) the layer 1 measurement result. However, for a terminal device in a stationary state, a terminal device with a low moving speed, or a terminal device that moves only in a range, a probability of performing cell handover is low. In this case, a measurement result reported by the terminal device has no meaning or is meaningless for handover decision. The measurement result reported by the terminal device is meaningful for handover decision only when the terminal device is close to a cell edge or is about to be handed over (for example, quality of a current cell is not good, or quality of a neighbor cell is good enough). In other words, if the network device configures periodic reporting of the layer 1 measurement result for the terminal device, when a probability of performing cell handover by the terminal device is low, utilization of the layer 1 measurement result that is frequently reported by the terminal device is not high, and it may be considered that the reporting is unnecessary. Consequently, measurement reporting overheads are high.

In view of this, related implementations of layer 1 measurement reporting are studied in embodiments of this application. For example, embodiments of this application provide a measurement reporting method, to reduce reporting overheads of a terminal device.

The following describes in detail the measurement reporting method provided in embodiments of this application with reference to specific embodiments. In the specific embodiments, an example in which the method provided in embodiments of this application is applied to the communication system shown in FIG. 1 is used. In addition, the method provided in embodiments of this application may be performed by a first communication apparatus and a second communication apparatus. The first communication apparatus may be a terminal device, or may be a chip, a chip system, or a processor that supports the terminal device in implementing the method. The second communication apparatus may be a network device, or may be a chip, a chip system, or a processor that supports the network device in implementing the method, or may be a logical node, a logical module, or software that can implement all or some functions of the network device.

**Embodiment 1**

FIG. 4 is a schematic flowchart corresponding to a measurement reporting method according to Embodiment 1 of this application. As shown in FIG. 4, the method includes the following steps.

**S401:** A terminal device determines that a reporting condition of a measurement event is satisfied.

(1) The measurement event is described.

The measurement event in this embodiment of this application may be a measurement event used to trigger layer 1 measurement reporting.

For example, the measurement event may be: A received RSRP of a reference signal or a beam of a serving cell is less than a preset threshold (plus an offset value); or a received RSRP of a reference signal or a beam of any candidate neighbor cell is greater than a preset threshold (plus an offset value); or a received RSRP of a reference signal or a beam of a specified candidate neighbor cell is greater than a preset threshold (plus an offset value); or a received RSRP of a reference signal or a beam of any/a specified candidate neighbor cell is greater than that of a reference signal or a beam of any/a specified serving cell (plus an offset value); or a received RSRP of a reference signal or a beam of any/a specified candidate neighbor cell is greater than a preset threshold (plus an offset value), and a received RSRP of a reference signal or a beam of a serving cell is less than a preset threshold (plus an offset value); or a received RSRP of a reference signal or a beam of any/a specified candidate neighbor cell is greater than a preset threshold 1 (plus an offset value), and/or a received RSRP of a reference signal or a beam of a serving cell is less than a preset threshold 2 (plus an offset value).

The received RSRP of the reference signal or the beam may be beam-level quality of a layer 1. For example, the received RSRP of the reference signal or the beam may be replaced with beam group-level quality of the layer 1, or may be replaced with cell-level quality of the layer 1 (for example, the cell-level quality of the layer 1 is obtained by linearly averaging measurement results of a plurality of layer 1 reference signals or beams), or may be replaced with beam-level quality of a layer 3 (which has been defined in a protocol), or may be replaced with cell-level quality of the layer 3 (which has been defined in the protocol, and is equivalent to a case that a layer 3 result triggers the layer 1 measurement reporting herein).

For another example, the measurement event may be: A time difference of arrival of a reference signal of a serving cell and a reference signal of any one or more candidate cells exceeds a cyclic prefix (cyclic prefix, CP), or the reference signal of the serving cell and the reference signal of the any one or more candidate cells do not meet a requirement of synchronous reception or cannot be received at the same time or cannot be received by using one reception timing, or the time difference of arrival exceeds a preset threshold. For example, an entering condition of the measurement event may be triggered by specifying a measurement status of one or more reference signals, or may be triggered by specifying a measurement result of one or more candidate cells. When the reporting condition of the measurement event is satisfied, reporting may be performed in a manner described below, or reporting may be performed through layer 3 signaling (for example, the layer 3 signaling is used to notify the network device that the reporting condition of the measurement event is satisfied).

The measurement event in this embodiment of this application includes but is not limited to the specific events listed above, and other similar events that indicate a reference signal change or a cell quality change of the serving cell and/or the candidate neighbor cell may be understood as measurement events.

(2) The reporting condition of the measurement event is described.

For example, the reporting condition of the measurement event may be configured by the network device for the terminal device. For example, the network device sends configuration information to the terminal device, where the configuration information is used to configure the reporting condition of the measurement event. Optionally, the configuration information is further used to configure one or more of the following: an identifier of the measurement event; an identifier of a measurement resource corresponding to the measurement event; an identifier of a measurement resource set corresponding to the measurement event; a quantity of measurement resources corresponding to a measurement result that needs to be reported when the reporting condition of the measurement event is satisfied; and a quantity of reporting times required when the reporting condition of the measurement event is satisfied. The network device may send the configuration information to the terminal device in a plurality of implementations. For example, the network device sends an RRC message to the terminal device, where the RRC message includes the configuration information.

For example, the reporting condition of the measurement event may alternatively be the entering condition of the measurement event or a trigger condition of the measurement event. For example, "the measurement event is that the received RSRP of the reference signal or the beam of the serving cell is less than the preset threshold", and the entering condition or the reporting condition or the trigger condition of the measurement event is that the received RSRP of the reference signal or the beam of the serving cell is less than the preset threshold. Therefore, when the received RSRP of the reference signal or the beam of the serving cell is less than the preset threshold, the terminal device may determine that the entering condition or the reporting condition or the trigger condition of the measurement event is satisfied.

S402: The terminal device sends first information and second information to the network device, where the first information indicates the measurement event, the second information includes measurement results of M measurement resources corresponding to the measurement event, and M is a positive integer.

Herein, the terminal device sends the first information and the second information to the network device in a plurality of manners. For example, the terminal device may send a MAC control element (control element, CE) to the network device, and the MAC CE includes the first information and the second information.

(1) The following describes a specific implementation in which the terminal device sends the MAC CE to the network device.

For example, the terminal device may send the MAC CE to the network device on a PUSCH resource. The PUSCH resource may be configured by the network device for the terminal device. For example, the PUSCH resource may be a scheduling-free resource preconfigured by the network device for the terminal device. In this case, the PUSCH resource may also be referred to as a configured grant (configured grant, CG) resource. For another example, the PUSCH resource may alternatively be a resource dynamically scheduled by the network device. Alternatively, the PUSCH resource may be configured by the network device for the terminal device based on a request of the terminal device. The following describes three possible manners, which are respectively Manner 1 to Manner 3.

**(1.1) Manner 1**

In Manner 1, after determining that the reporting condition of the measurement event is satisfied, the terminal device may determine whether an available PUSCH resource currently exists (the PUSCH resource herein may be preconfigured by the network device for the terminal device). If the PUSCH resource exists, the terminal device may send the MAC CE to the network device on the PUSCH resource. If the PUSCH resource does not exist, the terminal device may request the PUSCH resource from the network device by using an existing scheduling request (scheduling request, SR), that is, the terminal device sends request information to the network device (the existing SR is used as the request information). Correspondingly, after receiving the request information, the network device allocates the PUSCH resource to the terminal device, so that the terminal device can send the MAC CE on the PUSCH resource allocated by the network device.

For Manner 1, **in a possible implementation,** the network device may preconfigure, for the terminal device, whether the MAC CE needs to include the second information. For example, the network device may send first indication information to the terminal device by using an RRC message, where the first indication information indicates whether the MAC CE needs to include the second information (or the first indication information indicates whether the terminal device needs to report the first information and the second information at the same time). The first indication information and the configuration information in S401 may be carried in a same RRC message, or may be carried in different RRC messages.

- If the first indication information indicates that the MAC CE needs to include the second information, the MAC CE sent by the terminal device to the network device may include the first information and the second information. In this case, for content included in the MAC CE, refer to the following descriptions.
- If the first indication information indicates that the MAC CE does not need to include the second information, the MAC CE sent by the terminal device to the network device may include the first information but not include the second information. In this case, after receiving the MAC CE, the network device may learn, based on the first information in the MAC CE, of a specific measurement event whose reporting condition is satisfied. Further, optionally, the network device may obtain, in an existing manner, a measurement result of a measurement resource corresponding to the measurement event.

**In another possible implementation,** whether the MAC CE includes the second information may be independently determined by the terminal device. If the MAC CE sent by the terminal device includes the first information and the second information, the MAC CE may further include third information, and the third information indicates that the MAC CE includes both the first information and the second information, so that the network device parses the MAC CE. If the MAC CE sent by the terminal device includes the first information but does not include the second information, the MAC CE may not include the third information.

In this case, from a perspective of the network device, when the MAC CE includes the first information but does not include the second information, the network device may parse the MAC CE based on a first length; or when the MAC CE includes the first information and the second information, the network device may parse the MAC CE based on a second length. The second length is greater than the first length. Therefore, after receiving the MAC CE, the network device may determine, based on whether the MAC CE includes the third information, whether to parse the MAC CE based on the first length or the second length.

**(1.2) Manner 2**

In Manner 2, the network device may preconfigure a second uplink resource for the terminal device. The second uplink resource may be a dedicated PUCCH resource. "Dedicated" herein means that a first uplink resource (namely, a PUSCH resource) is specifically requested when the reporting condition of the measurement event is satisfied. Further, after determining that the reporting condition of the measurement event is satisfied, the terminal device may send request information to the network device on the second uplink resource, where the request information is used to request the first uplink resource. Correspondingly, after receiving the request information, the network device may send downlink control information (downlink control information, DCI) to the terminal device, where the DCI includes second indication information, and the second indication information indicates the first uplink resource. It should be understood that the DCI herein may alternatively be replaced with another possible message. In this embodiment of this application, the DCI is used as an example.

In other words, after determining that the reporting condition of the measurement event is satisfied, the terminal device may directly send the request information to the network device on the dedicated PUCCH resource without determining whether an available PUSCH resource currently exists (different from Manner 1).

**The following describes the request information in Manner 2.**

Optionally, the request information further indicates that the reporting condition of the measurement event is satisfied.

**In a possible implementation,** the request information may indicate that the reporting condition of the measurement event is satisfied, but does not specifically indicate a specific measurement event whose reporting condition is satisfied. For example, because the request information is carried on the dedicated PUCCH resource, after receiving the request information on the dedicated PUCCH resource, the network device may learn that the reporting condition of the measurement event is satisfied. This case may be understood as that the request information implicitly indicates that the reporting condition of the measurement event is satisfied. For another example, the request information may carry indication information, to explicitly indicate that the reporting condition of the measurement event is satisfied.

**In another possible implementation,** the request information indicates that the reporting condition of the measurement event is satisfied, and specifically indicates a specific measurement event whose reporting condition is satisfied.

For example, the network device may configure a dedicated PUCCH resource for each measurement event, for example, configure a dedicated PUCCH resource 1 for a measurement event 1, and configure a dedicated PUCCH resource 2 for a measurement event 2. Therefore, when a reporting condition of the measurement event 1 is satisfied, the terminal device may send the request information on the PUCCH resource 1; or when a reporting condition of the measurement event 2 is satisfied, the terminal device may send the request information on the PUCCH resource 2. Further, if the network device receives the request information on the PUCCH resource 1, the network device may learn that the reporting condition of the measurement event 1 is satisfied; or if the network device receives the request information on the PUCCH resource 2, the network device may learn that the reporting condition of the measurement event 2 is satisfied. This case may be understood as that the request information implicitly indicates that the reporting condition of the measurement event is satisfied.

For another example, the request information may explicitly indicate that the reporting condition of the measurement event is satisfied. An explicit indication manner may be as follows: The request information includes a plurality of bits, and each of the plurality of bits is associated with one measurement event. One of the bits is used as an example. If a value of the bit is "0", it indicates that a reporting condition of a measurement event associated with the bit is not satisfied. If the value of the bit is "1", it indicates that the reporting condition of the measurement event associated with the bit is satisfied. For example, the request information includes 4 bits, where a $1^{st}$ bit of the 4 bits is associated with the measurement event 1, a $2^{nd}$ bit is associated with the measurement event 2, a $3^{rd}$ bit is associated with a measurement event 3, and a $4^{th}$ bit is associated with a measurement event 4. If a value of the 4 bits is "0101", it indicates that reporting conditions of the measurement event 2 and the measurement event 4 are satisfied, but reporting conditions of the measurement event 1 and the measurement event 3 are not satisfied.

An association relationship between a bit in the request information and a measurement event may be preconfigured by the network device, or may be predefined in a protocol (for example, the bits sequentially correspond to the measurement events in an order of IDs of the measurement events). Optionally, the network device may modify the association relationship between the bit and the measurement event based on an actual requirement. For example, the network device may modify, by using a MAC CE, information about a measurement event associated with a bit (for example, modify a reporting condition of the measurement event). This is not limited in this application.

Another explicit indication manner may be as follows: The request information includes the identifier of the measurement event, and the identifier of the measurement event indicates that the reporting condition of the measurement event is satisfied. For example, if the terminal device meets the reporting conditions of the measurement event 1 and the measurement event 2, the request information includes an identifier of the measurement event 1 and an identifier of the measurement event 2.

**The following describes the DCI in Manner 2.**

Optionally, in addition to the second indication information, the DCI may further include one or more of the following items.

- The identifier of the measurement event: The identifier of the measurement event indicates that the first uplink resource is used to report the measurement result of the measurement resource corresponding to the measurement event. For example, the request information sent by the terminal device indicates that the reporting conditions of the measurement event 1 and the measurement event 2 are satisfied. If the DCI includes the identifier of the measurement event 1, it indicates that the first uplink resource is used to report a measurement result of a measurement resource corresponding to the measurement event 1. If the DCI includes the identifier of the measurement event 2, it indicates that the first uplink resource is used to report a measurement result of a measurement resource corresponding to the measurement event 2. If the DCI includes the identifiers of the measurement event 1 and the measurement event 2, it indicates that the first uplink resource is used to report measurement results of measurement resources corresponding to the measurement event 1 and the measurement event 2.

- Reporting manner information: The reporting manner information indicates a reporting manner of reporting the measurement result on the first uplink resource, and periodic reporting is used as an example herein.

- Report amount information: The report amount information indicates a quantity of times of reporting the measurement result on the first uplink resource. For example, when the reporting manner information indicates that the reporting manner is periodic reporting, a specific quantity of times of reporting may be further indicated by using the report amount information. For example, if the quantity of times of reporting indicated by the report amount information is 3, the first uplink resource may include three periodic PUSCH resources, and each PUSCH resource is used for one time of measurement reporting. In this case, the DCI may be DCI used to activate the first uplink resource (for details, refer to a CG configuration type 1 or type 2 in the protocol). Alternatively, the first uplink resource may be a resource used for one time of measurement reporting. In this case, the DCI may be DCI used to dynamically schedule the first uplink resource, and resources used for the remaining two times of measurement reporting may be dynamically scheduled by the network device by using other DCI.

- Reporting quantity information: The reporting quantity information indicates a quantity of measurement resources corresponding to each time of reporting the measurement result on the first uplink resource. For example, the quantity indicated by the reporting quantity information is M. It is assumed that the measurement event corresponds to N measurement resources, and the terminal device may select, based on measurement results of the N measurement resources, measurement results of M measurement resources for reporting. There may be a plurality of bases for the terminal device to select the measurement results of the M measurement resources from the measurement results of the N measurement resources. For example, the terminal device may select M measurement resources with better measurement results, and report the measurement results of the M measurement resources. N is a positive integer, and N is greater than or equal to M.

It may be understood that if the configuration information in S401 is used to configure "the quantity of measurement resources corresponding to the measurement result that needs to be reported when the reporting condition of the measurement event is satisfied", the DCI may not include the reporting quantity information; or if the configuration information in S401 is used to configure "the quantity of reporting times required when the reporting condition of the measurement event is satisfied", the DCI may not include the report amount information.

For example, the DCI may carry the foregoing information in a plurality of manners. For example, a field (trigger state) in the DCI for triggering CSI reporting may be reused to carry the foregoing information. Specifically, the network device may preconfigure, by using an RRC message, the foregoing information to be associated with a specified trigger state value. When the terminal device receives the DCI to trigger CSI reporting and the corresponding field is the specified value associated with the foregoing information, the terminal device may obtain the foregoing information based on the specified value.

**(1.3) Manner 3**

In Manner 3, the network device may preconfigure a second uplink resource for the terminal device, and the second uplink resource may be a dedicated PUCCH resource. Further, after determining that the reporting condition of the measurement event is satisfied, the terminal device may determine whether an available PUSCH resource currently exists. If the PUSCH resource exists, the terminal device may send a MAC CE to the network device on the PUSCH resource. If the PUSCH resource does not exist, the terminal device may send request information to the network device on the second uplink resource, where the request information is used to request a first uplink resource. Correspondingly, after receiving the request information, the network device may send DCI to the terminal device, where the DCI includes second indication information, and the second indication information indicates the first uplink resource. In this manner, for descriptions of the request information and the DCI, refer to Manner 2.

**(2)** The following describes content included in the MAC CE.

As described above, the MAC CE may include the first information and the second information, the first information indicates the measurement event, and the second information includes the measurement results of the M measurement resources corresponding to the measurement event. For example, the measurement results of the M measurement resources may be measurement results respectively corresponding to the M measurement resources, for example, a measurement result corresponding to the measurement resource 1, a measurement result corresponding to the measurement resource 2, ..., and a measurement result corresponding to the measurement resource M. Alternatively, the measurement results of the M measurement resources may be one measurement result obtained by weighting or combining the measurement results respectively corresponding to the M measurement resources, for example, one measurement result obtained by weighting the measurement results corresponding to the measurement resource 1 to the measurement resource M. In this embodiment of this application, that "the measurement results of the M measurement resources are the measurement results respectively corresponding to the M measurement resources" is used as an example for description.

The first information includes one or more of the following: the identifier of the measurement event; identifiers of the M measurement resources; an identifier of a cell associated with the M measurement resources; and an identifier of a measurement resource set to which the M measurement resources belong. The following provides descriptions with reference to Example 1 and Example 2.

**(2.1)** Example 1

If measurement resources that are required for reporting and that correspond to the measurement event are fixed, for example, the measurement resources that are required for reporting and that correspond to the measurement event are all measurement resources corresponding to the measurement event, the MAC CE may include the identifier of the measurement event and the measurement results of the M measurement resources, and the measurement results of the M measurement resources may be sequentially arranged (for example, arranged in ascending order of indexes of the measurement resources). A format of the MAC CE may be shown in Table 2.

Table 2: Examples of the format of the MAC CE

| Identifier of a measurement event (8 bits) | |
|---|---|
| Reserved bit | Measurement result 1 (7 bits) |
| Reserved bit | Measurement result 2 (7 bits) |
| Reserved bit | ... |
| Reserved bit | Measurement result M (7 bits) |

In this way, because the measurement resources that are required for reporting and that correspond to the measurement event are fixed, even if the MAC CE does not include identifiers of the measurement resources, after receiving the MAC CE, the network device may learn the measurement resources corresponding to the measurement results.

It may be understood that, the foregoing is described by using an example in which the identifier of the measurement event is indicated by 8 bits in the MAC CE (that is, the identifier of the measurement event occupies 8 bits). In another possible implementation, the 8 bits may be associated with different measurement events. One of the bits is used as an example. If a value of the bit is "0", it indicates that the measurement result reported by the terminal device is not a measurement result of a measurement resource corresponding to a measurement event associated with the bit. If a value of the bit is "1", it indicates that the measurement result reported by the terminal device is a measurement result of a measurement resource corresponding to a measurement event associated with the bit. Alternatively, a combined value of the 8 bits may indicate different measurement events. For example, 00000001 indicates one measurement event, and 00000011 indicates another measurement event. In this case, the 8 bits may indicate 128 measurement events in total.

In addition, the foregoing uses 8 bits as an example. Alternatively, the identifier of the measurement event may be indicated by fewer bits (less than 8 bits), or the measurement event may be associated with fewer bits, or different measurement events may be indicated by a combined value of fewer bits. In this case, the remaining bit in the 1st row in Table 2 is a reserved bit. Alternatively, the identifier of the measurement event may be indicated by more bits (more than 8 bits), or the measurement event is associated with more bits, or different measurement events are indicated by a combined value of more bits.

For example, in the 8 bits, a 1st bit from the right is associated with the measurement event 1, and a 2nd bit from the right is associated with the measurement event 2. If the terminal device reports, by using the MAC CE, measurement results of two measurement resources corresponding to the measurement event 1 and measurement results of two measurement resources corresponding to the measurement event 2, a format of the MAC CE may be shown in Table 3. The measurement results of the two measurement resources corresponding to the measurement event 1 and the measurement results of the two measurement resources corresponding to the measurement event 2 may be arranged in ascending order of indexes of the measurement events.

Table 3: Examples of the format of the MAC CE

| 0 | 0 | 0 | 0 | 0 | 0 | 1 | 1 |
|---|---|---|---|---|---|---|---|
| Reserved bit | Measurement result a1 (7 bits) | | | | | | |
| Reserved bit | Measurement result a2 (7 bits) | | | | | | |
| Reserved bit | Measurement result b1 (7 bits) | | | | | | |
| Reserved bit | Measurement result b2 (7 bits) | | | | | | |

The measurement result a1 and the measurement result a2 are measurement results of the two measurement resources corresponding to the measurement event 1, and the measurement result b1 and the measurement result b2 are measurement results of the two measurement resources corresponding to the measurement event 2.

**(2.2)** Example 2

If measurement resources that are required for reporting and that correspond to the measurement event are not fixed, for example, the measurement event corresponds to the N measurement resources, and a report quantity indicated by the network device to the terminal device is M (N is greater than M), the MAC CE may include the identifier of the measurement event, the identifiers of the M measurement resources, and the measurement results of the M measurement resources. A format of the MAC CE is shown in Table 4.

Table 4: Examples of the format of the MAC CE

| Identifier of a measurement event (8 bits) | |
|---|---|
| Reserved bit | Identifier of a measurement resource 1 |
| Reserved bit | Measurement result 1 (7 bits) |
| Reserved bit | Identifier of a measurement resource 2 |
| Reserved bit | Measurement result 2 (7 bits) |
| ... | ... |
| Reserved bit | Identifier of a measurement resource M |
| Reserved bit | Measurement result M (7 bits) |

Alternatively, the MAC CE may include the identifiers of the M measurement resources and the measurement results of the M measurement resources, and does not include the identifier of the measurement event. A format of the MAC CE is shown in Table 5. In this case, after receiving the MAC CE, the network device may determine the corresponding measurement event based on the identifiers of the M measurement resources.

Table 5: Examples of the format of the MAC CE

| Reserved bit | Identifier of a measurement resource 1 |
|---|---|
| Reserved bit | Measurement result 1 |
| Reserved bit | Identifier of a measurement resource 2 |
| Reserved bit | Measurement result 2 |
| ... | ... |
| Reserved bit | Identifier of a measurement resource M |
| Reserved bit | Measurement result M |

Alternatively, the MAC CE may include the identifier of the measurement event, the identifiers of the M measurement resources, the identifier of the cell associated with the M measurement resources, and the measurement results of the M measurement resources. A format of the MAC CE is shown in Table 6. As described above, when measurement resources associated with different cells have a same identifier, the terminal device needs to report a cell identity associated with the measurement resources to the network device for identification.

Table 6: Examples of the format of the MAC CE

| Identifier of a measurement event (8 bits) | |
|---|---|
| Reserved bit | Identifier of a measurement resource 1 |
| Reserved bit | Identifier of a cell associated with the measurement resource 1 |
| Reserved bit | Measurement result 1 |
| Reserved bit | Identifier of a measurement resource 2 |
| Reserved bit | Identifier of a cell associated with the measurement resource 2 |
| Reserved bit | Measurement result 2 |
| ... | ... |
| Reserved bit | Identifier of a measurement resource M |
| Reserved bit | Identifier of a cell associated with the measurement resource M |
| Reserved bit | Measurement result M |

It may be understood that, in Table 2 to Table 6, a quantity of bits occupied by each piece of information is merely an example, and the quantity of bits occupied by each piece of information is not limited in embodiments of this application. The formats of the MAC CE shown above are merely some examples. The format of the MAC CE is not limited in embodiments of this application. The foregoing descriptions are provided by using the example in which the MAC CE includes both the first information and the second information. When the MAC CE includes the first information but does not include the second information, reference may be made for implementation.

(3) The following describes the condition that needs to be satisfied for the layer 1 measurement reporting.

In this embodiment of this application, it is considered that in some possible scenarios, even if the reporting condition of the measurement event is satisfied, the terminal device may cancel reporting before performing reporting, to reduce reporting overheads. The following provides descriptions with reference to Example 1 and Example 2.

(3.1) Example 1

Before sending the MAC CE to the network device, the terminal device may first determine whether a first preset condition is satisfied. If the first preset condition is satisfied, the MAC CE may be sent to the network device; or if the first preset condition is not satisfied, the MAC CE may not be sent, that is, reporting is canceled.

For example, the network device may send third indication information to the terminal device, where the third indication information indicates that the first preset condition needs to be satisfied before the MAC CE is sent. Further, before sending the MAC CE, the terminal device may first determine whether the first preset condition is satisfied.

The first preset condition may include one or more of the following A1 to A4.

A1: The measurement results of the M measurement resources have not been reported.

As described above, the layer 1 measurement reporting may be configured or triggered by the network device. After reporting triggered by the measurement event is introduced in this embodiment of this application, the reporting triggered by the measurement event may coexist with the reporting configured or triggered by the network device. In this case, if the terminal device has reported the measurement results of the M measurement resources based on the reporting configured or triggered by the network device, the reporting triggered by the measurement event may be canceled, to avoid repeated reporting and reduce measurement reporting overheads.

For example, after determining that the reporting condition of the measurement event is satisfied, the terminal device prepares to report the measurement results of the M measurement resources. If a measurement result of at least one of the M measurement resources has been reported, the terminal device may cancel reporting the measurement results of the M measurement resources. If no measurement result of the M measurement resources has been reported, the terminal device may report the measurement results of the M measurement resources.

For another example, after determining that the reporting condition of the measurement event is satisfied, the terminal device prepares to report measurement results of K measurement resources. If measurement results of M measurement resources in the K measurement resources are not reported, and measurement results of other K-M measurement resources are reported, the terminal device may report the measurement results of the M measurement resources, and cancel reporting the measurement results of the other K-M measurement resources.

A2: A measurement result of a measurement resource set to which the M measurement resources belong has not been reported.

In this case, if the terminal device has reported, based on the reporting configured or triggered by the network device, the measurement result of the measurement resource set to which the M measurement resources belong, the reporting triggered by the measurement event may be canceled, to avoid repeated reporting and reduce measurement reporting overheads.

For example, after determining that the reporting condition of the measurement event is satisfied, the terminal device prepares to report the measurement results of the M measurement resources, where the M measurement resources belong to a measurement resource set 1. If the terminal device has reported a measurement result of the measurement resource set 1, the terminal device may cancel reporting the measurement results of the M measurement resources.

A3: A time interval between first time and second time is less than first preset duration, where the first time is time at which it is determined that the reporting condition of the measurement event is satisfied, and the second time is time at which the MAC CE is sent.

The second time may be start time of the PUSCH resource used to carry the MAC CE. For the time interval between the first time and the second time, refer to (a) in FIG. 5. The first preset duration may be preconfigured by the network device or agreed on in a protocol.

A4: The time interval between the first time and the second time is greater than or equal to the preset duration, but the reporting condition of the measurement event is always satisfied within the time interval.

In this embodiment of this application, because the measurement result has time validity, after the terminal device meets the reporting condition of the measurement event, if the terminal device reports, at a long interval, the measurement result of the measurement resource corresponding to the measurement event, the reported measurement result may be meaningless. Therefore, when the time interval between the first time and the second time is greater than or equal to the first preset duration, the terminal device may cancel reporting; or when the time interval between the first time and the second time is less than the first preset duration, the terminal device may not cancel reporting. In this way, unnecessary reporting overheads can be reduced.

Alternatively, when the time interval between the first time and the second time is greater than or equal to the preset duration, but the reporting condition of the measurement event is always satisfied within the time interval, the terminal device may not cancel reporting; or when the time interval between the first time and the second time is greater than or equal to the preset duration, and the reporting condition of the measurement event is not satisfied within the time interval, the terminal device may cancel reporting.

**(3.2)** Example 2

As described above, the terminal device may send the request information to the network device, to request the first uplink resource. In this case, before sending the request information to the network device, the terminal device may first determine whether a second preset condition is satisfied. If the second preset condition is satisfied, the request information may be sent to the network device. If the second preset condition is not satisfied, the request information may not be sent anymore, that is, reporting is canceled.

For example, the network device may send seventh information to the terminal device, where the seventh information indicates that the second preset condition needs to be satisfied before the request information is sent. Further, before sending the request information, the terminal device may first determine whether the second preset condition is satisfied.

The second preset condition may include one or more of the following B1 to B4.

**B1:** The measurement results of the M measurement resources have not been reported.

**B2:** A measurement result of a measurement resource set to which the M measurement resources belong has not been reported.

For B1 and B2, refer to the descriptions in A1 and A2. A difference lies in that when B1 or B2 is not satisfied, the terminal device cancels sending the request information, and further cancels reporting. When or A2 is not satisfied, the terminal device may send the request information, but even if the request information is sent, reporting may be canceled.

**B3:** A time interval between first time and third time is less than second preset duration, where the first time is time at which it is determined that the reporting condition of the measurement event is satisfied, and the third time is time at which the request information is sent.

The third time may be start time of the PUCCH resource used to carry the request information. For the time interval between the first time and the third time, refer to (b) in FIG. 5. The second preset duration may be preconfigured by the network device or agreed on in a protocol.

**B4:** The time interval between the first time and the third time is greater than or equal to the second preset duration, but the reporting condition of the measurement event is always satisfied within the time interval.

For B1 to B4, refer to the descriptions in to A4. A difference lies in that when B1 to B4 are not satisfied, the terminal device cancels sending the request information, and further cancels reporting. When to A4 are not satisfied, the terminal device may send the request information, but even if the request information is sent, reporting may be canceled.

It may be understood that the foregoing manner of whether to cancel reporting may also be extended to another possible scenario. For example, for a neighbor cell, before measurement reporting (or request information sending) triggered by a measurement event associated with the neighbor cell, if a measurement result of the neighbor cell has been reported in another manner, the measurement reporting triggered by the measurement event may be canceled. For another example, for a cell group (or a cell set or a neighbor cell set), before measurement reporting (or request information sending) triggered by a measurement event associated with at least one cell in the cell group, if a measurement result of the cell group has been reported in another manner, the measurement reporting triggered by the measurement event may be canceled.

According to the method in Embodiment 1, after determining that the reporting condition of the measurement event is satisfied, the terminal device may send the result of the measurement resource corresponding to the measurement event to the network device. In comparison with a manner in which the terminal device periodically reports the measurement result, reporting overheads can be effectively reduced, and transmission resources can be saved.

**Embodiment 2**

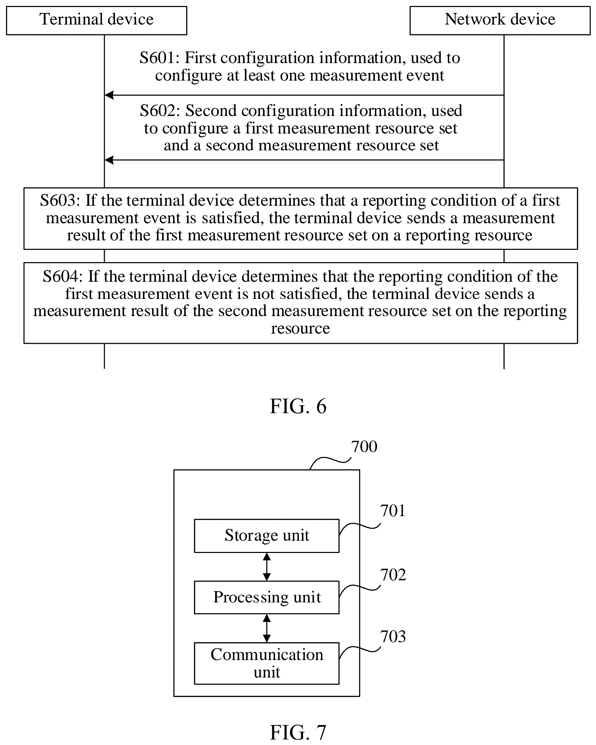

FIG. 6 is a schematic flowchart corresponding to a measurement reporting method according to Embodiment 2 of this application. As shown in FIG. 6, the method includes the following steps.

**S601:** A network device sends first configuration information to a terminal device, where the first configuration information is used to configure at least one measurement event.

The measurement event in this embodiment of this application may be a measurement event used to trigger layer 1 measurement reporting. That the first configuration information is used to configure the at least one measurement event may include that the first configuration information is used to configure a reporting condition of the at least one measurement event, and the like. For details, refer to the descriptions in Embodiment 1.

**S602:** The network device sends second configuration information to the terminal device, where the second configuration information is used to configure a first measurement resource set and a second measurement resource set, the first measurement resource set is associated with a first measurement event in the at least one measurement event, and the second measurement resource set is not associated with any one of the at least one measurement event. The first measurement resource set and the second measurement resource set are associated with a same reporting resource.

Herein, that the first measurement resource set and the second measurement resource set are associated with the same reporting resource may mean that the first measurement resource set and the second measurement resource set are associated with a same reporting configuration.

For example, before the layer 1 measurement reporting triggered by the measurement event is introduced, one measurement resource set is associated with one reporting configuration, and the measurement resource set is not associated with the measurement event. For ease of description, such a measurement resource set is referred to as the second measurement resource set. In this embodiment of this application, after the layer 1 measurement reporting triggered by the measurement event is introduced, the first measurement resource set may be introduced, and the first measurement resource set may be associated with the measurement event. Further, the network device may configure the first measurement resource set and the second measurement resource set to be associated with the same reporting configuration, that is, associated with the same reporting resource. In this case, in a possible implementation, the terminal device may selectively report a measurement result of the first measurement resource set or a measurement result of the second measurement resource set on the reporting resource. For example, S603 or S604 is performed.

**S603:** If the terminal device determines that a reporting condition of the first measurement event is satisfied, the terminal device sends the measurement result of the first measurement resource set on the reporting resource.

**S604:** If the terminal device determines that the reporting condition of the first measurement event is not satisfied, the terminal device sends the measurement result of the second measurement resource set on the reporting resource.

For example, the terminal device may send uplink control information (uplink control information, UCI) on the reporting resource, where the UCI includes the measurement result of the first measurement resource set or the measurement result of the second measurement resource set. Further, the UCI may include indication information, and the indication information indicates whether the reporting condition of the first measurement event is satisfied. For example, the indication information may be 1 bit. When a value of the bit is "1", it indicates that the reporting condition of the first measurement event is satisfied. When a value of the bit is "0", it indicates that the reporting condition of the first measurement event is not satisfied.

For example, the UCI includes the measurement result of the first measurement resource set and the indication information, and the indication information indicates that the reporting condition of the first measurement event is satisfied. Further, after receiving the UCI, the network device may learn, based on the indication information, that a first measurement result is the measurement result of the first measurement resource set.

According to the method in Embodiment 2, the existing reporting configuration is enhanced, that is, the reporting configuration is not only associated with the second measurement resource set, but also associated with the first measurement resource set, so that measurement result reporting triggered by the measurement event can be implemented, to reduce reporting overheads.

For Embodiment 1 and Embodiment 2, it may be understood that:

(1) step numbers in the flowcharts described in Embodiment 1 and Embodiment 2 are merely examples of executing the procedures, and do not constitute a limitation on an execution sequence of the steps; in embodiments of this application, there is no strict execution sequence between steps having no time sequence dependency relationship with each other; not all steps shown in each flowchart are necessarily performed steps; and some steps may be deleted based on each flowchart according to an actual requirement, or other possible steps may be added based on each flowchart according to an actual requirement; and

(2) the foregoing focuses on differences between different embodiments, different implementations, and different examples; and for other content than the differences, different embodiments may be mutually referenced, or in a same embodiment, different implementations or different examples may also be mutually referenced.

The foregoing mainly describes the solutions provided in embodiments of this application from a perspective of interaction between communication apparatuses. It may be understood that, to implement the foregoing functions, the network device and the terminal device may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network device and the terminal device based on the foregoing method examples. For example, division into each functional unit may be based on each corresponding function, or two or more functions may be integrated into one unit. The integrated unit may be implemented in a form of hardware, or may be implemented in a form of a software functional unit.

When an integrated unit is used, FIG. 7 is a block diagram of a possible example of an apparatus according to an embodiment of this application. As shown in FIG. 7, an apparatus 700 may include a processing unit 702 and a communication unit 703. The processing unit 702 is configured to control and manage an action of the apparatus 700. Optionally, the processing unit 702 is also referred to as a processor. The communication unit 703 is configured to support communication between the apparatus 700 and another device. Optionally, the communication unit 703 is also referred to as a transceiver unit, and may include a receiving unit and/or a sending unit, configured to perform receiving and sending operations respectively; or the communication unit 703 is also referred to as a transceiver machine or a transceiver, and may include a receiver machine and/or a transmitter machine, configured to perform receiving and sending operations respectively. Optionally, the apparatus 700 may further include a storage unit 701, configured to store program code and/or data of the apparatus 700.

The apparatus 700 may be the terminal device in the foregoing embodiments. The processing unit 702 may support the apparatus 700 in performing actions of the terminal device in the foregoing method examples. Alternatively, the processing unit 702 mainly performs an internal action of the terminal device in the method examples, and the communication unit 703 may support communication between the apparatus 700 and another device.

For example, in an embodiment, the processing unit 702 is configured to determine that a reporting condition of a measurement event is satisfied; and the communication unit 703 is configured to send a medium access control MAC control element CE to a network device, where the MAC CE includes first information and second information, the first information indicates the measurement event, the second information includes measurement results of M measurement resources corresponding to the measurement event, and M is a positive integer.

In a possible design, the first information includes one or more of the following: an identifier of the measurement event; identifiers of the M measurement resources; an identifier of a cell associated with the M measurement resources; and an identifier of a measurement resource set to which the M measurement resources belong.

In a possible design, the communication unit 703 is further configured to receive first indication information from the network device, where the first indication information indicates that the MAC CE needs to include the first information and the second information.

In a possible design, the MAC CE includes third information, and the third information indicates that the MAC CE includes the second information.

In a possible design, the communication unit 703 is further configured to: receive second indication information from the network device, where the second indication information indicates a first uplink resource; and send the MAC CE to the network device on the first uplink resource.

In a possible design, the communication unit 703 is further configured to send request information to the network device, where the request information is used to request the first uplink resource.

In a possible design, the request information further indicates that the reporting condition of the measurement event is satisfied.

In a possible design, the request information is carried on a second uplink resource, and the second uplink resource is preconfigured by the network device.

In a possible design, the second indication information is carried in DCI, and the DCI further includes one or more of the following: the identifier of the measurement event, where the identifier of the measurement event indicates that the first uplink resource is used to report the measurement result of the measurement resource corresponding to the measurement event; reporting manner information, where the reporting manner information indicates to periodically report the measurement result on the first uplink resource; report amount information, where the report amount information indicates a quantity of times of reporting the measurement result on the first uplink resource; reporting quantity information, where the reporting quantity information indicates a quantity of measurement resources corresponding to each time of reporting the measurement result on the first uplink resource.

In a possible design, the communication unit 703 is further configured to receive configuration information from the network device, where the configuration information is used to configure the reporting condition of the measurement event.

In a possible design, the configuration information is further used to configure one or more of the following: the identifier of the measurement event; an identifier of a measurement resource corresponding to the measurement event; an identifier of a measurement resource set corresponding to the measurement event; a quantity of measurement resources corresponding to a measurement result that needs to be reported when the reporting condition of the measurement event is satisfied; and a quantity of reporting times required when the reporting condition of the measurement event is satisfied.

In a possible design, before sending the MAC CE to the network device, the processing unit 702 is further configured to determine that a preset condition is satisfied, where the preset condition includes one or more of the following: The measurement results of the M measurement resources have not been reported; a measurement result of the measurement resource set to which the M measurement resources belong has not been reported; a time interval between first time and second time is less than preset duration, where the first time is time at which it is determined that the reporting condition of the measurement event is satisfied, and the second time is time at which the MAC CE is sent; or the time interval is greater than or equal to the preset duration, but the reporting condition of the measurement event is always satisfied within the time interval.

In a possible design, the communication unit 703 is further configured to receive third indication information from the network device, where the third indication information indicates that the preset condition needs to be satisfied before the MAC CE is sent.

The apparatus 700 may be the network device in the foregoing embodiments. The processing unit 702 may support the apparatus 700 in performing actions of the network device in the foregoing method examples. Alternatively, the processing unit 702 mainly performs an internal action of the network device in the method examples, and the communication unit 703 may support communication between the apparatus 700 and another device.

For example, in an embodiment, the communication unit 703 is configured to receive a MAC CE from a terminal device, where the MAC CE includes first information and second information, the first information indicates a measurement event, the second information includes measurement results of M measurement resources corresponding to the measurement event, M is a positive integer, and the MAC CE is sent by the terminal device after the terminal device determines that a reporting condition of the measurement event is satisfied.

In a possible design, the first information includes one or more of the following: an identifier of the measurement event; identifiers of the M measurement resources; an identifier of a cell associated with the M measurement resources; and an identifier of a measurement resource set to which the M measurement resources belong.

In a possible design, the communication unit 703 is further configured to send first indication information to the terminal device, where the first indication information indicates that the MAC CE needs to include the first information and the second information.

In a possible design, the MAC CE includes third information, and the third information indicates that the MAC CE includes the second information.

In a possible design, the communication unit 703 is further configured to: send second indication information to the terminal device, where the second indication information indicates a first uplink resource; and receive the MAC CE from the terminal device on the first uplink resource.

In a possible design, the communication unit 703 is further configured to receive request information from the terminal device, where the request information is used to request the first uplink resource.

In a possible design, the request information further indicates that the reporting condition of the measurement event is satisfied.

In a possible design, the request information is carried on a second uplink resource, and the second uplink resource is preconfigured by the network device.

In a possible design, the second indication information is carried in DCI, and the DCI further includes one or more of the following: the identifier of the measurement event, where the identifier of the measurement event indicates that the first uplink resource is used to report the measurement result of the measurement resource corresponding to the measurement event; reporting manner information, where the reporting manner information indicates to periodically report the measurement result on the first uplink resource; report amount information, where the report amount information indicates a quantity of times of reporting the measurement result on the first uplink resource; reporting quantity information, where the reporting quantity information indicates a quantity of measurement resources corresponding to each time of reporting the measurement result on the first uplink resource.

In a possible design, the communication unit 703 is further configured to send configuration information to the terminal device, where the configuration information is used to configure the reporting condition of the measurement event.

In a possible design, the configuration information is further used to configure one or more of the following: the identifier of the measurement event; an identifier of a measurement resource corresponding to the measurement event; an identifier of a measurement resource set corresponding to the measurement event; a quantity of measurement resources corresponding to a measurement result that needs to be reported when the reporting condition of the measurement event is satisfied; and a quantity of reporting times required when the reporting condition of the measurement event is satisfied.

In a possible design, the communication unit 703 is further configured to send third indication information to the terminal device, where the third indication information indicates that a preset condition needs to be satisfied before the MAC CE is sent, and the preset condition includes one or more of the following: The measurement results of the M measurement resources have not been reported; a measurement result of the measurement resource set to which the M measurement resources belong has not been reported; a time interval between first time and second time is less than preset duration, where the first time is time at which it is determined that the reporting condition of the measurement event is satisfied, and the second time is time at which the MAC CE is sent; or the time interval is greater than or equal to the preset duration, but the reporting condition of the measurement event is always satisfied within the time interval.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing method, for example, one or more application-specific integrated circuits (application specific integrated circuit, ASIC), one or more microprocessors (digital signal processor, DSP), one or more field programmable gate arrays (field programmable gate array, FPGA), or a combination of at least two of these types of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated and implemented in a form of a system-on-a-chip (system-on-a-chip, SOC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

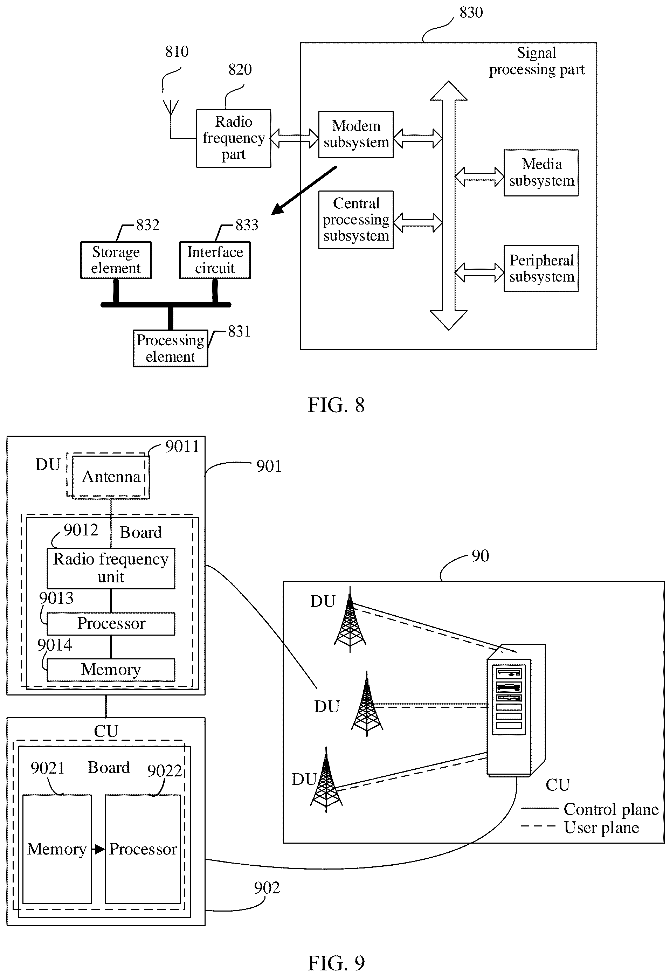

FIG. 8 is a diagram of a structure of a terminal device according to an embodiment of this application. The terminal device may be applied to the communication system shown in FIG. 1, and is configured to implement operations of the terminal device in the foregoing embodiments. As shown in FIG. 8, the terminal device includes: an antenna 810, a radio frequency part 820, and a signal processing part 830. The antenna 810 is connected to the radio frequency part 820. In a downlink direction, the radio frequency part 820 receives, through the antenna 810, information sent by a network device; and sends, to the signal processing part 830 for processing, the information sent by the network device. In an uplink direction, the signal processing part 830 processes the information of the terminal device, and sends the processed information to the radio frequency part 820; and the radio frequency part 820 processes the information of the terminal device, and then sends the processed information to the network device through the antenna 810.

The signal processing part 830 may include a modem subsystem, configured to implement processing of data at each communication protocol layer; may further include a central processing subsystem, configured to implement processing of an operating system and an application layer of the terminal device; and may further include another subsystem, for example, a multimedia subsystem or a peripheral subsystem. The multimedia subsystem is configured to control a camera, screen display, and the like of the terminal device, and the peripheral subsystem is configured to implement a connection to another device. The modem subsystem may be a separately disposed chip.

The modem subsystem may include one or more processing elements 831, for example, include a main control CPU and another integrated circuit. In addition, the modem subsystem may further include a storage element 832 and an interface circuit 833. The storage element 832 is configured to store data and a program. However, the program used to perform the methods performed by the terminal device in the foregoing methods may not be stored in the storage element 832, but is stored in a memory outside the modem subsystem, and is loaded and used by the modem subsystem when to be used. The interface circuit 833 is configured to communicate with another subsystem.

The modem subsystem may be implemented by a chip. The chip includes at least one processing element and an interface circuit. The processing element is configured to perform steps of any method performed by the foregoing terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, the program used to perform the method performed by the terminal device in the foregoing method may be in a storage element located on a different chip from the processing element, namely, an off-chip storage element. In this case, the processing element invokes or loads the program from the off-chip storage element to an on-chip storage element, to invoke and perform the method performed by the terminal device in the foregoing method embodiments.

In another implementation, units of the terminal device that implement the steps in the foregoing method may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. These integrated circuits may be integrated together to form a chip.

Units of the terminal device that implement the steps in the foregoing method may be integrated together, and implemented in a form of SOC. The SOC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logic circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 7. For example, the processing element may be a general-purpose processor, for example, a CPU; or may be one or more integrated circuits configured to implement the foregoing method, for example, one or more ASICs, one or more microprocessors DSPs, one or more FPGAs, or a combination of at least two of these types of integrated circuits. The storage element may be implemented by using a memory, and a function of the storage element may be the same as a function of the storage unit described in FIG. 7. The storage element may be one memory, or an umbrella term of a plurality of memories.

The terminal device shown in FIG. 8 can implement processes related to the terminal device in the foregoing method embodiments. Operations and/or functions of modules in the terminal device shown in FIG. 8 are respectively intended to implement corresponding procedures in the foregoing method embodiments. For details, refer to the descriptions in the foregoing method embodiments. To avoid repetition, detailed descriptions are properly omitted herein.

FIG. 9 is a diagram of a structure of a network device according to an embodiment of this application. The network device (or a base station) may be used in the communication system shown in FIG. 1, to perform functions of the network device in the foregoing method embodiments. As shown in FIG. 9, the network device 90 may include one or more DUs 901 and one or more CUs 902. The DU 901 may include at least one antenna 9011, at least one radio frequency unit 9012, at least one processor 9013, and at least one memory 9014. The DU 901 is mainly configured to receive and send radio frequency signals, perform conversion between a radio frequency signal and a baseband signal, and perform partial baseband processing. The CU 902 may include at least one processor 9022 and at least one memory 9021.

The CU 902 is mainly configured to perform baseband processing, control the network device, and the like. The DU 901 and the CU 902 may be physically disposed together, or may be physically separated, namely, a distributed base station. The CU 902 is a control center of the network device, may also be referred to as a processing unit, and is mainly configured to complete a baseband processing function. For example, the CU 902 may be configured to control the network device to perform the operation procedure related to the network device in the foregoing method embodiments.

In addition, optionally, the network device 90 may include one or more radio frequency units, one or more DUs, and one or more CUs. The DU may include at least one processor 9013 and at least one memory 9014, the radio frequency unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access standard, or may separately support radio access networks (for example, an LTE network, a 5G network, or another network) with different access standards. The memory 9021 and the processor 9022 may serve one or more boards. In other words, a memory and a processor may be disposed on each board. Alternatively, a plurality of boards may share a same memory and a same processor. In addition, a necessary circuit may further be disposed on each board. The DU 901 may include one or more boards. A plurality of boards may jointly support a radio access network (for example, a 5G network) with a single access standard, or may separately support radio access networks (for example, an LTE network, a 5G network, or another network) with different access standards. The memory 9014 and the processor 9013 may serve one or more boards. In other words, a memory and a processor may be disposed on each board. Alternatively, a plurality of boards may share a same memory and a same processor. In addition, a necessary circuit may further be disposed on each board.

The network device shown in FIG. 9 can implement processes related to the network device in the foregoing method embodiments. Operations and/or functions of modules in the network device shown in FIG. 9 are respectively intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions can be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions can also be stored in a computer-readable memory that can instruct a computer or another programmable data processing device to work in a specific manner, so that instructions stored in the computer-readable memory generate a manufacturer including an instruction apparatus, and the instruction apparatus implements a specific function in one or more procedures in the flowcharts and/or one or more blocks in the block diagrams.

The computer program instructions can alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

**Claims**

1. A measurement reporting method, wherein the method comprises:

    determining that a reporting condition of a measurement event is satisfied; and
    sending a medium access control MAC control element CE to a network device, wherein the MAC CE comprises first information and second information, the first information indicates the measurement event, the second information comprises measurement results of M measurement resources corresponding to the measurement event, and M is a positive integer.

2. The method according to claim 1, wherein the first information comprises one or more of the following:

    an identifier of the measurement event;
    identifiers of the M measurement resources;
    an identifier of a cell associated with the M measurement resources; and
    an identifier of a measurement resource set to which the M measurement resources belong.

3. The method according to claim 1 or 2, wherein the method further comprises:
   receiving first indication information from the network device, wherein the first indication information indicates that the MAC CE needs to comprise the second information.

4. The method according to claim 1 or 2, wherein the MAC CE comprises third information, and the third information indicates that the MAC CE comprises the second information.

5. The method according to any one of claims 1 to 4, wherein sending the MAC CE to the network device comprises:

    receiving second indication information from the network device, wherein the second indication information indicates a first uplink resource; and
    sending the MAC CE to the network device on the first uplink resource.

6. The method according to claim 5, wherein the method further comprises:
   sending request information to the network device, wherein the request information is used to request the first uplink resource.

7. The method according to claim 6, wherein the request information further indicates that the reporting condition of the measurement event is satisfied.

8. The method according to claim 6 or 7, wherein the request information is carried on a second uplink resource, and the second uplink resource is preconfigured by the network device.

9. The method according to any one of claims 5 to 8, wherein the second indication information is carried in downlink control information DCI, and the DCI further comprises one or more of the following:

    the identifier of the measurement event, wherein the identifier of the measurement event indicates that the first uplink resource is used to report the measurement result of the measurement resource corresponding to the measurement event;

reporting manner information, wherein the reporting manner information indicates to periodically report the measurement result on the first uplink resource;

report amount information, wherein the report amount information indicates a quantity of times of reporting the measurement result on the first uplink resource; and

reporting quantity information, wherein the reporting quantity information indicates a quantity of measurement resources corresponding to each time of reporting the measurement result on the first uplink resource.

10. The method according to any one of claims 1 to 9, wherein the method further comprises:
receiving configuration information from the network device, wherein the configuration information is used to configure the reporting condition of the measurement event.

11. The method according to claim 10, wherein the configuration information is further used to configure one or more of the following:

the identifier of the measurement event;
an identifier of a measurement resource corresponding to the measurement event;
an identifier of a measurement resource set corresponding to the measurement event;
a quantity of measurement resources corresponding to a measurement result that needs to be reported when the reporting condition of the measurement event is satisfied; and
a quantity of reporting times required when the reporting condition of the measurement event is satisfied.

12. The method according to any one of claims 1 to 11, wherein before sending the MAC CE to the network device, the method further comprises: determining that a preset condition is satisfied, wherein
the preset condition comprises one or more of the following:

the measurement results of the M measurement resources have not been reported;
a measurement result of the measurement resource set to which the M measurement resources belong has not been reported; and
a time interval between first time and second time is less than preset duration, wherein the first time is time at which it is determined that the reporting condition of the measurement event is satisfied, and the second time is time at which the MAC CE is sent; or
the time interval is greater than or equal to the preset duration, but the reporting condition of the measurement event is always satisfied within the time interval.

13. The method according to claim 12, wherein the method further comprises:
receiving third indication information from the network device, wherein the third indication information indicates that the preset condition needs to be satisfied before the MAC CE is sent.

14. A communication apparatus, comprising a processor, wherein the processor is coupled to a memory, the memory stores a computer program, and the processor is configured to invoke the computer program in the memory, so that the communication apparatus performs the method according to any one of claims 1 to 13.

15. A computer-readable storage medium, wherein the storage medium stores a computer program or instructions, and when the computer program or instructions are executed by a computer, the method according to any one of claims 1 to 13 is implemented.

16. A communication system, wherein the communication system comprises a terminal device and a network device;

the terminal device is configured to perform the method according to any one of claims 1 to 13; and
the network device is configured to receive a MAC CE from the terminal device, wherein the MAC CE comprises first information and second information, the first information indicates the measurement event, the second information comprises measurement results of M measurement resources corresponding to the measurement event, and M is a positive integer.

17. The communication system according to claim 16, wherein the network device is further configured to send first indication information to the terminal device, wherein the first indication information indicates that the MAC CE needs to comprise the second information.

18. The communication system according to claim 16 or 17, wherein the network device is further configured to: send second indication information to the terminal device, wherein the second indication information indicates a first uplink resource; and receive the MAC CE on the first uplink resource.

19. The communication system according to any one of claims 16 to 18, wherein the network device is further configured to send third indication information to the terminal device, wherein the third indication information indicates that a preset condition needs to be satisfied before the MAC CE is sent; and

the preset condition comprises one or more of the following:

the measurement results of the M measurement resources have not been reported;
a measurement result of a measurement resource set to which the M measurement resources belong has not been reported; and
a time interval between first time and second time is less than preset duration, wherein the first time is time at which it is determined that a reporting condition of the measurement event is satisfied, and the second time is time at which the MAC CE is sent; or
the time interval is greater than or equal to the preset duration, but the reporting condition of the measurement event is always satisfied within the time interval.

20. A communication apparatus, comprising a unit or module configured to perform the method according to any one of claims 1 to 13.

21. A computer program product, wherein when a computer reads and executes the computer program product, the computer is enabled to perform the method according to any one of claims 1 to 13.

FIG. 1

FIG. 2

Quality of a serving cell

Thresh+Hys
Thresh
Thresh–Hys

Time

Time hysteresis

Report interval

FIG. 3

Terminal device                    Network device

S401: Determine that a reporting condition
of a measurement event is satisfied

S402: Send a MAC CE, where the MAC CE
includes first information and second
information, the first information indicates the
measurement event, and the second
information includes measurement results of M
measurement resources corresponding to the
measurement event

FIG. 4

PUSCH resource
used to carry a
MAC CE

Time interval

First time                    Second time                    Time

(a)

PUCCH resource used
to carry request
information

Time interval

First time                    Third time                    Time

(b)

FIG. 5

```
┌──────────────────────┐                          ┌──────────────────────┐
│   Terminal device     │                          │   Network device      │
└──────────┬───────────┘                          └──────────┬───────────┘
           │      S601: First configuration information, used to           │
           │◄─────────  configure at least one measurement event  ────────│
           │                                                              │
           │      S602: Second configuration information, used             │
           │◄────── to configure a first measurement resource set ────────│
           │            and a second measurement resource set             │
```

S603: If the terminal device determines that a reporting condition of a first measurement event is satisfied, the terminal device sends a measurement result of the first measurement resource set on a reporting resource

S604: If the terminal device determines that the reporting condition of the first measurement event is not satisfied, the terminal device sends a measurement result of the second measurement resource set on the reporting resource

FIG. 6

700

```
┌───────────────────────────────┐
│                               │  701
│    ┌────────────────────┐     │
│    │    Storage unit     │◄────┤
│    └─────────▲──────────┘     │
│              │                │  702
│    ┌─────────▼──────────┐     │
│    │  Processing unit    │◄────┤
│    └─────────▲──────────┘     │
│              │                │  703
│    ┌─────────▼──────────┐     │
│    │   Communication     │◄────┤
│    │       unit          │     │
│    └────────────────────┘     │
└───────────────────────────────┘
```

FIG. 7

830

810

820

Signal
processing part

Radio
frequency
part

Modem
subsystem

Media
subsystem

832                    833

Central
processing
subsystem

Storage
element

Interface
circuit

Peripheral
subsystem

Processing    831
element

FIG. 8

DU              9011

Antenna              901

9012        Board

Radio frequency
unit

9013

Processor

9014

Memory

CU

9021    Board    9022

Memory ▶ Processor

902

90

DU

DU

DU

CU

—— Control plane
- - - User plane

FIG. 9

## INTERNATIONAL SEARCH REPORT

| International application No. |
| --- |
| **PCT/CN2024/075747** |

| A. | CLASSIFICATION OF SUBJECT MATTER |
| --- | --- |
| | H04W 24/10(2009.01)i;  H04W 24/08(2009.01)i |

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, CNKI: 触发, 条件, 上报, 测量, 事件, 标识, 索引, 资源, 参考信号, CSI, MAC, CE, measure, cell, index, ID, identifier, condition, trigger, event, report, resource, RS, reference, signal

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 116321277 A (HUAWEI TECHNOLOGIES CO., LTD.) 23 June 2023 (2023-06-23) claims 1-19 | 1-21 |
| X | CN 113163438 A (VIVO COMMUNICATION TECHNOLOGY CO., LTD.) 23 July 2021 (2021-07-23) description, paragraphs 32-139 | 1-21 |
| X | CN 111901822 A (ZTE CORP.) 06 November 2020 (2020-11-06) description, paragraphs 101-118, and figure 5 | 1-21 |
| X | WO 2023284535 A1 (HUAWEI TECHNOLOGIES CO., LTD.) 19 January 2023 (2023-01-19) description, paragraphs 137-148 and 172-196 | 1-21 |
| A | CN 110139306 A (HUAWEI TECHNOLOGIES CO., LTD.) 16 August 2019 (2019-08-16) entire document | 1-21 |
| A | WO 2022071840 A1 (TELEFONAKTIEBOLAGET LM ERICSSON (PUBL)) 07 April 2022 (2022-04-07) entire document | 1-21 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 April 2024** | **24 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075747**

| Patent document cited in search report | | | Publication date (day/month/year) | Patent family member(s) | | | Publication date (day/month/year) |
|---|---|---|---|---|---|---|---|
| CN | 116321277 | A | 23 June 2023 | None | | | |
| CN | 113163438 | A | 23 July 2021 | WO | 2021147913 | A1 | 29 July 2021 |
| | | | | KR | 20220130750 | A | 27 September 2022 |
| | | | | US | 2022345198 | A1 | 27 October 2022 |
| | | | | EP | 4096282 | A1 | 30 November 2022 |
| | | | | JP | 2023511414 | A | 17 March 2023 |
| CN | 111901822 | A | 06 November 2020 | WO | 2021204121 | A1 | 14 October 2021 |
| | | | | KR | 20220130763 | A | 27 September 2022 |
| | | | | EP | 4135390 | A1 | 15 February 2023 |
| | | | | US | 2023052779 | A1 | 16 February 2023 |
| | | | | JP | 2023514850 | A | 11 April 2023 |
| WO | 2023284535 | A1 | 19 January 2023 | CN | 15623507 | A | 17 January 2023 |
| CN | 110139306 | A | 16 August 2019 | US | 2020367120 | A1 | 19 November 2020 |
| | | | | WO | 2019154350 | A1 | 15 August 2019 |
| | | | | EP | 3742788 | A1 | 25 November 2020 |
| WO | 2022071840 | A1 | 07 April 2022 | EP | 4222878 | A1 | 09 August 2023 |
| | | | | US | 2023362817 | A1 | 09 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310140828